# EUROPÄISCHE PATENTSCHRIFT

(11) **EP 3 862 237 B1**
(45) Veröffentlichungstag und Bekanntmachung des Hinweises auf die Patenterteilung: **21.09.2022**
(21) Anmeldenummer: 20156176.8
(22) Anmeldetag: 07.02.2020
(51) Int. Cl.: B60T 17/12

(54) **FAHRZEUGSICHERUNGSSYSTEM**
SAFETY DEVICE FOR VEHICLE
SYSTÈME DE SÉCURISATION D'UN VÉHICULE

(43) Veröffentlichungstag der Anmeldung: 11.08.2021
(73) Patentinhaber: ZF CV Systems Global GmbH, 3006 Bern (CH)
(72) Erfinder: RICKE, Janik, 31311 Uetze (DE)
(74) Vertreter: Rabe, Dirk-Heinrich

(56) Entgegenhaltungen:
- EP-A1- 1 310 412
- DE-A1-102007 050 221
- DE-A1-102007 052 439
- US-A1- 2002 112 912

## Beschreibung

Die Erfindung betrifft ein Fahrzeugsicherheitssystem für ein Fahrzeug, insbesondere Nutzfahrzeug, mit einem Bremssystem, das eine Feststellbremse umfasst, wobei die Feststellbremse zwischen einer Fahrstellung und einer Bremsstellung schaltbar ist, wobei das Fahrzeugsicherheitssystem zum Sichern des Fahrzeugs nach einem Unfall ausgebildet ist und eine Steuereinheit aufweist, die zum Ermitteln eines Unfalls des Fahrzeugs und zum Schalten der Feststellbremse des Fahrzeugs in die Bremsstellung ausgebildet ist, wenn ein Unfall des Fahrzeugs ermittelt wird. Ferner betrifft die Erfindung ein Verfahren zum Sichern eines Fahrzeugs und ein Fahrzeug aufweisend ein Fahrzeugsicherheitssystem.

Zum Schutz der Insassen eines Fahrzeugs, insbesondere Nutzfahrzeugs, ist es vielfach wünschenswert das Fahrzeug automatisiert zu bremsen. Insbesondere unmittelbar nach einem Unfall kann es hilfreich sein, das Fahrzeug zu bremsen, um beispielsweise ein Verschieben des Fahrzeugs bei einem weiteren Aufprall oder eine Bergung verunfallter Personen zu erleichtern. Oftmals besteht für Rettungskräfte bei Unfällen das Problem, dass vor einem Beginn der Menschenrettung das verunfallte Fahrzeug gesichert werden muss, um eine zusätzliche Gefährdung der Rettungskräfte auszuschließen. Abhängig vom Beladungszustand des Fahrzeugs und dem Unfallort kann hierfür Zeit und eine Vielzahl von Helfern benötigt werden, wodurch die Rettung verunfallter Personen verzögert wird. Besonders ausgeprägt ist dieses Problem bei Unfällen mit mehreren Fahrzeugen.

Insbesondere wenn Nutzfahrzeuge, wie beispielsweise Lastkraftwagen, am Unfallgeschehen beteiligt sind, ergibt sich häufig das Problem, dass ein Fahrer des Nutzfahrzeugs aus einer deformierten Kabine geborgen werden muss. Vielfach ist dabei der Einsatz hydraulischer Rettungszylinder nicht ausreichend, so dass eine Fahrerkabine des Nutzfahrzeugs auseinandergezogen werden muss, wobei eine vorherige Fixierung des Fahrzeugs unerlässlich ist. Ein weiteres Problem kann sich bei der Bergung von umgestürzten Anhängern oder Fahrzeug ergeben, wenn die Räder des Fahrzeugs beim Aufstellen freigegeben sind und das Fahrzeug nach dem Aufstellen ins Rollen gerät. Insbesondere können Rettungskräfte gefährdet sein, wenn zum Aufstellen des Anhängers oder Fahrzeugs weitere Hilfsmittel, wie beispielsweise ein Kran oder eine Seilwinde, verwendet werden, die durch das Fahrzeug mitgerissen werden können.

Ferner besteht vor allem auf viel befahrenen Straßen die Gefahr, dass ein stehendes Fahrzeug durch ein weiteres Fahrzeug getroffen und in ein drittes Fahrzeug geschoben wird, wodurch Fahrzeuginsassen eingeklemmt werden können.

Aus dem Stand der Technik sind Systeme bekannt, die eine Sicherheit von Fahrzeugen im Vorfeld oder nach einem Unfall erhöhen sollen.

DE 10 2007 052 439 A1 offenbart ein Fahrerassistenzsystem für einen Kraftwagen, mit mindestens einem Betriebsdatensensor zum Erfassen von den momentanen oder zukünftigen Bewegungszustand des Kraftwagens charakterisierenden Betriebsdaten und einer elektrischen Steuerung, die ausgebildet ist, um bei einem Vorliegen von vorbestimmten Betriebsdaten eine autonome Notbremsung des Kraftwagens auszulösen. Ferner ist vorgesehen, dass die elektrische Steuerung eingerichtet ist, um unmittelbar vor, während oder nach einer Notbremsung eine Feststellbremse des Kraftwagens in eine Aktivierungsstellung zu bringen. Ferner kann die elektrische Steuerung ein Feststell-Signal senden, wenn ein Airbag des Fahrzeugs ausgelöst worden ist.

DE 10 2011 114 072 B4 offenbart ein Fahrerassistenzsystem mit einer Steuerung, welche ausgebildet ist, um von einer Detektionseinrichtung erfasste Fahrdaten zu verarbeiten und bei einem Vorliegen von vorbestimmten Fahrdaten eine Bremseinrichtung zu veranlassen, eine autonome Bremsung des Fahrzeugs durchzuführen. Die Steuerung ist dazu ausgebildet, dass sie auch nach dem autonomen Verzögern des Fahrzeugs auf die vorgegebene Geschwindigkeit bzw. in dem Stillstand die Bremseinrichtung zugespannt hält und/oder eine weitere Bremseinrichtung zuspannt, um das Fahrzeug in dem gebremsten Zustand zu halten. Durch eine Betätigung eines Gaspedals kann die Bremseinrichtung des Fahrzeugs gelöst und das Fahrzeug aus eigener Kraft wieder in Bewegung gesetzt werden.

Auch DE 10 2007 050 221 A1 offenbart ein Fahrerassistenzsystem für einen Kraftwagen, das bei Vorliegen vorbestimmter Fahrdaten eine autonome Notbremsung des Kraftwagens auslöst. Eine elektrische Steuerung ist dazu eingerichtet, nach einer Notbremsung dann, wenn eine Vorderfahrzeugdetektionseinrichtung ein Vorder-Fahrzeug detektiert, eine Bremse des Kraftwagens in einer Bremsstellung zu halten oder in die Bremsstellung zu bringen.

Die EP1310412 A1 bezieht sich auf eine Bremsvorrichtung für Fahrzeuge, die in der Lage ist, weitere Unfälle nach einem Fahrzeugkollisionsunfall durch Betätigen einer Feststellbremse bei dem Kollisionsunfall zu verhindern. Die Bremsvorrichtung umfasst ein Kollisionserfassungsmittel zum Erfassen einer Fahrzeugkollision und zum Ausgeben eines diesem entsprechenden Signals und ein Notbremsmittel, um zu bewirken, dass eine Fußfeststellbremse einen Bremsvorgang als Reaktion auf das Signal von der Bremse ausführt. Somit irgendwelche zusätzlichen Unfälle im Anschluss an den Kollisionsunfall durch gewaltsames Bremsen des Fahrzeugs bei dem Kollisionsunfall verhindert werden können. Die US 20020112912 A1 offenbart ein System und Verfahren zum Betätigen eines Bremssystems eines Kraftfahrzeugs, das einen Airbag-Controller aufweist, der ein Airbag-Aktivierungssignal als Reaktion auf einen vorbestimmten Fahrzeugzustand, wie beispielsweise eine Verzögerung, erzeugt. Ein Geschwindigkeitssensor wird verwendet, um ansprechend auf die Fahrzeuggeschwindigkeit ein Geschwindigkeitssignal zu erzeugen. Eine Bremssteuerung empfängt das Geschwindigkeitssignal und das Airbag-Aktivierungssignal. Die Bremssteuerung betätigt die Bremsen des Kraftfahrzeugs ansprechend auf das Fahrzeuggeschwindigkeitssignal, das zumindest eine vorbestimmte Geschwindigkeit anzeigt, und das Airbag-Aktivierungssignal.

Für die Funktion der vorbekannten Systeme ist es notwendig, dass vor dem Unfall eine Notbremsung stattgefunden oder ein Airbag des Fahrzeugs ausgelöst hat. Wenn jedoch ein stehendes Fahrzeug von einem weiteren Fahrzeug gerammt wird, führt das stehende Fahrzeug vor und/oder während des Unfalls keine Notbremsung durch und ein entsprechendes Notbremssignal ist nicht vorhanden. Dies kann beispielsweise der Fall sein, wenn ein erstes Fahrzeug ein stehendes zweites Fahrzeug in ein drittes Fahrzeug oder anderes Hindernis schiebt, wodurch ein Fahrer des zweiten Fahrzeugs eingeklemmt wird. Dies ist insbesondere bei Auffahrunfällen an Stauenden häufig der Fall. Ferner ist nicht in jeder Aufprallsituation ein Auslösen des Airbags sichergestellt. Die vorbeschriebenen Systeme sind daher meist nur für bestimmte Unfallsituationen, wie beispielsweise einen Frontalaufprall, geeignet.

Die Aufgabe der vorliegenden Erfindung besteht daher darin ein Fahrzeugsicherheitssystem mit einer gegenüber dem Stand der Technik verbesserten Funktionalität bereitzustellen. Insbesondere soll damit eine Bergung verunfallter Personen und ein Sichern der Unfallstelle erleichtert werden.

Die Erfindung löst die vorstehend beschriebene Aufgabe in einem ersten Aspekt bei einem Fahrzeugsicherheitssystem durch eine Sensoreinheit zum Erfassen und Bereitstellen von ersten Fahrzeugdaten, die eine Drehlage des Fahrzeugs repräsentieren, wobei die Steuereinheit dazu ausgebildet ist, das Ermitteln des Unfalls basierend auf den ersten Fahrzeugdaten durchzuführen.

Die Drehlage des Fahrzeugs beschreibt eine Orientierung des Fahrzeugs im Raum. Änderungen der Drehlage werden durch Rotations- und/oder Taumelbewegungen des Fahrzeugs hervorgerufen. Insbesondere beschreibt die Drehlage eine Lage der Achsen eines fahrzeugfesten kartesischen Koordinatensystems relativ zum Koordinatensystem der Erde, wobei das fahrzeugfeste Koordinatensystem durch eine Hochachse, Querachse und eine Längsachse des Fahrzeugs definiert wird. Dabei erstreckt sich die Längsachse von einem Heck zu einer Front des Fahrzeugs und die Hochachse von einem Unterboden des Fahrzeugs zu einer dem Unterboden des Fahrzeugs gegenüberliegenden Seite. Die Querachse erstreckt sich rechtwinklig zur Hochachse und zur Längsachse. Eine Drehung des Fahrzeugs um seine Hochachse wird dabei als Gier-Bewegung, eine Drehung um die Querachse als Nick-Bewegung und eine Drehung um die Längsachse als Roll-Bewegung bezeichnet. Vorzugsweise repräsentieren die Fahrzeugdaten eine absolute Drehlage des Fahrzeugs zum Koordinatensystem der Erde. Es kann auch vorgesehen sein, dass die Fahrzeugdaten neben oder anstatt der absoluten Drehlage des Fahrzeugs eine Änderung der Drehlage und/oder eine Änderungsrate des Fahrzeugs repräsentieren.

Die Steuereinheit ist dazu ausgebildet, zu ermitteln, ob das Fahrzeug in einen Unfall verwickelt ist. Die Steuereinheit ist beispielsweise dazu ausgebildet, zu erkennen, wenn das Fahrzeug bei einem Auffahrunfall stillsteht und von einem zweiten Fahrzeug gerammt wird. In Antwort auf das Ermitteln schaltet die Steuereinheit die Feststellbremse des Fahrzeugs in die Bremsstellung. Vorzugsweise weist das Bremssystem des Fahrzeugs als Federspeicherbremsen ausgebildete Feststellbremsen auf, wobei die Steuereinheit vorzugsweise dazu ausgebildet ist, Federspeicher der Federspeicherbremsen zu entlüften und die Feststellbremse somit in die Bremsstellung zu bringen. Das Ermitteln eines Unfalls, d.h. das Ermitteln ob das Fahrzeug in einen Unfall verwickelt ist, wird durch die Steuereinheit basierend auf den ersten Fahrzeugdaten durchgeführt. Da die ersten Fahrzeugdaten eine Drehlage des Fahrzeugs repräsentieren, ist das Ermitteln eines Unfalls auch dann möglich, wenn das Fahrzeug stillsteht, kein Notbremssignal und/oder kein Airbagsignal bereitgestellt wurde. Eine vorbekannte Unfallerkennung wird also in vorteilhafter Weise mit der Sensoreinheit erweitert. Ist das Fahrzeug beispielsweise in einen Auffahrunfall verwickelt, führt es eine Nick-Bewegung aus, die durch die Sensoreinheit des Fahrzeugs erfasst werden kann. Die Sensoreinheit stellt daraufhin die Nick-Bewegung des Fahrzeugs repräsentierende erste Fahrzeugdaten bereit. Ebenso kann die Sensoreinheit Gier-Bewegungen des Fahrzeugs, wie sie beispielsweise bei einem Seitenaufprall auftreten, und/oder Roll-Bewegungen des Fahrzeugs, die beispielsweise auftreten, wenn das Fahrzeug umgekippt oder sich überschlägt, erfassen und entsprechende erste Fahrzeugdaten bereitstellen. Es soll verstanden werden, dass das Fahrzeug auch ein Anhänger sein oder aufweisen kann. Vorzugsweise ist die Sensoreinheit dazu ausgebildet, das Ermitteln des Unfalls basierend auf ersten Fahrzeugdaten durchzuführen, die von einer externen Steuereinheit und/oder einer externen Infrastruktur, insbesondere einem Verkehrsleitsystem, bereitgestellt werden.

In einer ersten bevorzugten Ausführungsform weist die Sensoreinheit einen Drehratensensor auf, der zum Ermitteln einer Änderung der Drehlage des Fahrzeugs um eine Hochachse, Querachse und/oder Längsachse des Fahrzeugs ausgebildet ist. Es kann jedoch auch vorgesehen sein, dass die ersten Fahrzeugdaten von einem Drehratensensor an der Sensoreinheit bereitgestellt werden, der zum Ermitteln der Änderung der Drehlage des Fahrzeugs um die Hochachse, Querachse und/oder Längsachse des Fahrzeugs ausgebildet ist. Vorzugsweise weist die Sensoreinheit jeweils zumindest einen Drehratensensor zum Ermitteln einer Änderung der Drehlage des Fahrzeugs um die Hochachse, die Querachse und die Längsachse des Fahrzeugs auf. Es kann jedoch auch vorgesehen sein, dass der Drehratensensor zum Ermitteln von Änderungen der Drehlage des Fahrzeugs um mehr als eine der Achsen, besonders bevorzugt alle Achsen ausgebildet ist. Vorzugsweise ist der Drehratensensor zum Ermitteln einer Änderungsrate der Drehlage des Fahrzeugs ausgebildet. Die Änderungsrate der Drehlage beschreibt eine Winkeländerung zumindest einer der Achsen des Fahrzeugs pro Zeiteinheit. Vorzugsweise ist der Drehratensensor dazu ausgebildet, Fahrzeugdaten bereitzustellen, die eine absolute Lage des Fahrzeugs repräsentieren. Die absolute Lage des Fahrzeugs beschreibt eine Lage des Fahrzeugs relativ zu einem Untergrund auf dem sich das Fahrzeug befindet. Es kann auch vorgesehen sein, dass die Steuereinheit dazu ausgebildet ist, basierend auf den vom Drehratensensor bereitgestellten ersten Fahrzeugdaten die absolute Lage des Fahrzeugs zu ermitteln. Beispielsweise gibt die absolute Lage an, ob das Fahrzeug an einem Hang steht. Vorzugsweise ist die Steuereinheit dazu ausgebildet, zu ermitteln, ob das Fahrzeug umgekippt ist oder sich überschlagen hat. Hierfür kann vorgesehen sein, dass Die Steuereinheit dazu ausgebildet ist, zu erkennen, wenn das Fahrzeug auf einer Fahrzeugseite und/oder einem Fahrzeugdach liegt.

Vorzugsweise weist die Sensoreinheit einen Achslastsensor auf, der zum Ermitteln einer Achslast von Achsen des Fahrzeugs ausgebildet ist. Besonders bevorzugt ist der Achslastsensor und/oder die Steuereinheit zum Ermitteln einer Achslastverteilung des Fahrzeugs ausgebildet. Die Achslastverteilung ist eine relative Verteilung der Masse des Fahrzeugs auf dessen Achsen. Vorzugsweise kann die Achslastverteilung auch eine relative Massenverteilung auf Räder des Fahrzeugs sein. Ist das Fahrzeug in einen Unfall verwickelt, ändert sich aufgrund von Trägheitseffekten eine Schwerpunktlage des Fahrzeugs, wodurch auch die Achslastverteilung bzw. die Achslast auf den Achsen und/oder Rädern des Fahrzeugs verändert wird. Die Achslastverteilung repräsentiert somit eine Drehlage des Fahrzeugs. Das Ermitteln einer Achslast eignet sich insbesondere auch zum Ermitteln von Unfällen, in denen der Airbag des Fahrzeugs nicht auslöst. Wenn beispielsweise ein zweites Fahrzeug unter den Anhänger oder ein Heck eines ersten Fahrzeugs fährt, ändert sich die Achslast des ersten Fahrzeugs, auch wenn ein Airbag des ersten Fahrzeugs durch das Auffahren des ersten Fahrzeugs nicht auslöst.

Ferner eignet sich eine Achslastverteilung zum Ermitteln einer absoluten Lage des Fahrzeugs. Ist das Fahrzeug beispielsweise umgekippt oder liegt das Fahrzeug auf dem Fahrzeugdach, sind die Achsen des Fahrzeugs zumindest teilweise entlastet, sodass eine absolute Lage des Fahrzeugs ermittelt werden kann. Ferner kann eine Anordnung des Fahrzeugs in einem Gefälle vorzugsweise dadurch ermittelt werden, dass die Achslastverteilung gegenüber einer Anordnung des Fahrzeugs auf einer horizontalen Ebene dauerhaft verändert ist. Vorzugsweise weist die Sensoreinheit zumindest einen Achslastsensor und zumindest einen Drehratensensor auf.

In einer bevorzugten Weiterbildung ist die Steuereinheit dazu angepasst, das Ermitteln eines Unfalls unter Berücksichtigung eines Zeitverlaufs der Fahrzeugdaten durchzuführen. Vorzugsweise weist die Steuereinheit einen Speicher auf, der zum Speichern mehrerer der ersten Fahrzeugdaten ausgebildet ist. Die Steuereinheit kann dazu ausgebildet sein, den Zeitverlauf der Fahrzeugdaten zu ermitteln. Es kann jedoch auch vorgesehen sein, dass die Sensoreinheit den Zeitverlauf der Fahrzeugdaten bereitstellt. Der Zeitverlauf der Fahrzeugdaten umfasst dabei vorzugsweise mehrere zeitlich aufeinanderfolgende Fahrzeugdaten. Eine Bereitstellungsfrequenz, mit der die Fahrzeugdaten bereitgestellt werden, ist vorzugsweise in einem Bereich von 1 Hz bis 1000 kHz, bevorzugt 1 Hz bis 100 Hz sind, bevorzugt 1 Hz bis 10 kHz, bevorzugt 10 Hz bis 100 kHz, bevorzugt 100 Hz bis 100 kHz, besonders bevorzugt 100 Hz bis 200 Hz.

Vorzugsweise ist die Steuereinheit dazu ausgebildet, in Antwort auf das Ermitteln eines Unfalls zusätzlich zur Feststellbremse des Fahrzeugs auch eine Betriebsbremse des Fahrzeugs in eine Bremsstellung zu schalten. Somit kann ein sicheres Bremsen des Fahrzeugs vorzugsweise auch dann sichergestellt werden, wenn die Feststellbremse aufgrund des Unfalls beschädigt ist. Weiterhin kann eine Bremswirkung erhöht werden, wodurch eine verbesserte Sicherung des Fahrzeugs erfolgt. Es kann jedoch auch vorgesehen sein, dass die Steuereinheit dazu ausgebildet ist, nur die Betriebsbremse des Fahrzeugs in die Bremsstellung zu schalten.

Bevorzugt ist die Steuereinheit dazu ausgebildet, basierend auf den bereitgestellten Fahrzeugdaten zu ermitteln, ob alle Räder des Fahrzeugs stillstehen, wobei die Steuereinheit besonders bevorzugt dazu ausgebildet, die Feststellbrems nur dann einzulegen, wenn alle Räder des Fahrzeugs stillstehen. Beispielsweise kann somit ein Einlegen der Feststellbrems des Fahrzeugs verhindert werden, wenn sich das Fahrzeug in Bewegung befindet. Während der Fahrt kann ein Einlegen der Feststellbremse zum Blockieren der Räder des Fahrzeugs führen.

In einer bevorzugten Ausführungsform ist die Steuereinheit dazu ausgebildet, das Ermitteln des Unfalls basierend auf den Fahrzeugdaten und einem Fahrzeugsignal durchzuführen, das von einem Fahrzeugsubsystem des Fahrzeugs, vorzugsweise einem Raddrehzahlsensor, einem Motorsteuergerät, einer zentralen Hauptsteuereinheit, einem Öldrucksensor, einem Kühlmittelsensor, einem Koppelkraftsensor, einem Beschleunigungssensor, einem Umweltsensor und/oder einem Knickwinkelsensor, bereitgestellt wird. Der Umweltsensor ist vorzugsweise eine Kamera, ein Ultraschallsensor, ein Radar und/oder ein Lidar-Sensor.

Ein Subsystem des Fahrzeugs stellt eine Funktionseinheit dar, die zum Erfüllen einer oder mehrerer Fahrzeugfunktionen funktionell zusammenwirken. Beispielsweise kann ein Kühlwassersystem des Fahrzeugs zum Kühlen eines Motors des Fahrzeugs dienen. Auch das Bremssystem des Fahrzeugs ist ein Sub-system. Es soll verstanden werden, dass ein Subsystem des Fahrzeugs auch in weitere Subsysteme untergliedert sein kann. Beispielsweise kann das Bremssystem des Fahrzeugs einen Vorderachsbremskreis und einen Hinterachsbremskreis aufweisen. Vorzugsweise werden die Fahrzeugsignale von einer zentralen Steuereinheit des Fahrzeugs bereitgestellt. Es kann jedoch auch vorgesehen sein, dass die Subsysteme die Fahrzeugsignale unmittelbar bereitstellen. Durch das Ermitteln des Unfalls basierend auf Fahrzeugdaten und einem Fahrzeugsignal kann eine Genauigkeit, Qualität und/oder Geschwindigkeit des Ermittelns verbessert werden.

Vorzugsweise ist das Fahrzeugsubsystem ein Knickwinkelsystem, das zum Ermitteln eines Knickwinkelsignals ausgebildet ist, das einen Knickwinkel zwischen dem Fahrzeug und einem an das Fahrzeug gekoppelten Anhänger repräsentiert. Besonders ein Seitenaufprall kann sehr schnelle Änderungen des Knickwinkels verursachen. Es kann auch vorgesehen sein, dass das Ermitteln eines Unfalls basierend auf mehreren Fahrzeugsignalen durchgeführt wird. Die Fahrzeugsignale können dabei von nur einem Subsystem des Fahrzeugs oder von mehreren verschiedenen Subsystemen bereitgestellt werden. Beispielsweise kann ein weiteres Fahrzeugsignal eine Lenkbewegung des Fahrzeugs repräsentieren. Fahrzeugsignale, welche eine Lenkbewegung und einen Knickwinkel repräsentieren, können in vorteilhafter Weise ergänzend zum Ermitteln eines Unfalls des Fahrzeugs herangezogen werden. Vorzugsweise kann die Steuereinheit dazu ausgebildet sein, zu ermitteln, ob eine Änderung des Knickwinkels durch eine Lenkbewegung des Fahrzeugs bedingt ist. Es soll verstanden werden, dass die Steuereinheit das Ermitteln eines Unfalls auch basierend auf den ersten Fahrzeugdaten und einer Vielzahl von Fahrzeugsignalen durchführen kann.

Vorzugsweise ist die Steuereinheit dazu ausgebildet, zu bestimmen, ob das Fahrzeugsignal ein vordefiniertes Signalkriterium erfüllt und einen Unfall des Fahrzeugs nur dann zu ermitteln, wenn das Fahrzeugsignal das Signalkriterium erfüllt. Das Signalkriterium kann beispielsweise ein Überschreiten oder Unterschreiten einer vordefinierten Achslast einer Vorderachse des Fahrzeugs und/oder einer vordefinierten Änderungsrate des Knickwinkels sein. Das Fahrzeugsignal ist vorzugsweise eine notwendige Voraussetzung für das Ermitteln eines Unfalls des Fahrzeugs. Das Fahrzeugsignal dient dann einem Plausibilisieren eines basierend auf den ersten Fahrzeugdaten ermittelten Unfalls des Fahrzeugs. Ermittelt die Steuereinheit beispielsweise basierend auf den ersten Fahrzeugdaten einen Unfall, das Fahrzeugsignal entspricht jedoch einem Signal, das das Ausbleiben eines Unfalls repräsentiert, ermittelt die Steuereinheit, dass kein Unfall vorliegt. Es kann jedoch auch vorgesehen sein, dass das Fahrzeugsignal und die ersten Fahrzeugdaten zum Ermitteln eines Unfalls des Fahrzeugs gewichtet werden. Wenn beispielsweise die ersten Fahrzeugdaten eine besonders schnelle und große Änderung der Drehlage des Fahrzeugs repräsentieren, kann vorgesehen sein, dass dem Fahrzeugsignal eine geringere Gewichtung beim Ermitteln des Unfalls zukommt. So kann beispielsweise bei besonders große Änderungen und/oder Änderungsraten der Drehlage des Fahrzeugs ein Unfall auch dann ermittelt werden, wenn das Fahrzeugsignal das Ausbleiben eines Unfalls repräsentiert. Ferner kann vorgesehen sein, dass den ersten Fahrzeugdaten und dem Fahrzeugsignal eine feste Gewichtung in Bezug auf deren Signifikanz beim Ermitteln eines Unfalls zukommt. Bevorzugt erfolgt eine Gewichtung unter Verwendung von Fehlerraten beim Ermitteln der ersten Fahrzeugdaten und des Fahrzeugsignals.

In einer bevorzugten Ausführungsform ist das Fahrzeugsignal ein Lenksignal, ein Versorgungsspannungssignal des Fahrzeugs, ein Raddrehzahlsignal, ein Motorsignal, ein Öldrucksignal, ein Kühlmittelstandssignal, ein Koppelkraftsignal, ein Umweltsignal eines Umweltsensors und/oder ein Knickwinkelsignal. Vorzugsweise ist die Steuereinheit dazu ausgebildet, basierend auf dem Lenksignal zu ermitteln, ob ein Lenkbefehl eines Benutzers und/oder einer zentralen Steuereinheit des Fahrzeugs vorliegt. Bevorzugt ist die Steuereinheit dazu ausgebildet, basierend auf dem Lenksignal und den ersten Fahrzeugdaten zu ermitteln, ob eine durch die ersten Fahrzeugdaten repräsentierte Änderung der Drehlage des Fahrzeugs durch eine Lenkbewegung hervorgerufen wird. Ein Raddrehzahlsignal repräsentiert unter anderem eine Bewegung des Fahrzeugs. Vorzugsweise ist die Steuereinheit dazu ausgebildet, basierend auf dem Raddrehzahlsignal zu ermitteln, ob das Fahrzeug stillsteht. Ferner bevorzugt ist die Steuereinheit dazu ausgebildet, basierend auf dem Versorgungsspannungssignal zu ermitteln, ob ein Subsystem des Fahrzeugs, insbesondere elektrisches Subsystem des Fahrzeugs, einen Fehler aufweist. Wird beispielsweise ein elektrisches Subsystem bei einem Unfall zerstört, oder von einer Spannungsversorgung des Fahrzeugs getrennt, kann dies in einer kurzfristigen Änderung des Versorgungsspannungssignals resultieren und somit auf einen Unfall hinweisen. Das Kühlmittelstandssignal erlaubt einen Rückschluss, ob ein Kühlkreislauf des Fahrzeugs beschädigt ist. Beispielsweise indiziert ein rascher Abfall eines Kühlmittelstands eine Beschädigung des Kühlmittelsystems, die durch einen Unfall bedingt sein kann. Vorzugsweise wird ein Abfall des Kühlmittelstands des Fahrzeugs durch das Kühlmittelstandssignal repräsentiert, wobei die Steuereinheit zum Ermitteln des Abfalls des Kühlmittelstands ausgebildet ist.

In einer bevorzugten Weiterbildung ist die Steuereinheit dazu ausgebildet, in Antwort auf ein Fahrsignal, das von einem Fahrpedal des Fahrzeugs bereitgestellt wird, und/oder in Antwort auf ein Notlösesignal, das von einer Notlöseeinrichtung bereitgestellt wird, die Feststellbremse des Fahrzeugs in eine Fahrstellung zu bringen. Dies kann vorteilhaft sein, wenn zum Sichern einer Unfallstelle oder zum Bergen verunfallte Personen eine Lage des Fahrzeugs verändert werden muss. Vorzugsweise ist die Notlöseeinrichtung an einem Fahrzeugäußeren angeordnet. Hierdurch kann eine Zugänglichkeit durch Rettungskräfte vereinfacht werden.

Vorzugsweise ist das Fahrzeugsicherheitssystem in ein elektronisches Bremssystem des Fahrzeugs integriert. Dies ermöglicht eine besonders kompakte Bauweise und/oder eine Reduzierung der Montagekosten. Es soll verstanden werden, dass Komponenten des Fahrzeugsicherheitssystems zugleich auch Komponenten des elektronischen Bremssystems sein können. Beispielsweise kann eine zentrale Steuereinheit des elektronischen Bremssystems auch die Steuereinheit des Fahrzeugsicherheitssystems sein. Ferner kann das Fahrzeugsicherheitssystems mittels einer Spannungsversorgung des elektronischen Bremssystems versorgt werden.

Bevorzugt weist das Fahrzeugsicherheitssystem ein Notrufsystem auf, das dazu ausgebildet ist, in Antwort auf das Ermitteln eines Unfalls des Fahrzeugs einen Notruf auszulösen. Durch das Auslösen eines Notrufs kann eine möglichst schnelle Rettung verunfallter Personen sichergestellt werden. Vorzugsweise ist die Steuereinheit dazu ausgebildet, zum Auslösen des Notrufs eine Kommunikationseinrichtung des Fahrzeugs anzusteuern. Es kann jedoch auch vorgesehen sein, dass das Fahrzeugsicherheitssystem eine Notrufeinrichtung aufweist, die zum Senden von Notrufsignalen ausgebildet ist. Besonders bevorzugt ist die Steuereinheit dazu ausgebildet, eine Position des Fahrzeugs zu ermitteln und die Position des Fahrzeugs beim Auslösen des Notrufs zu senden.

Vorzugsweise ist die Steuereinheit dazu ausgebildet, das Ermitteln des Unfalls unabhängig von einem Notbremssignal und/oder einem Airbag-Signal des Fahrzeugs durchzuführen. Hierdurch wird in vorteilhafter Weise erreicht, dass ein Unfall des Fahrzeugs auch dann Ermittelt wird, wenn vor dem Unfall keine Notbremsung des Fahrzeugs durchgeführt wurde und/oder ein Airbag des Fahrzeugs nicht ausgelöst hat. Vorzugsweise weist der Notruf fahrzeugspezifische Informationen und/oder Information über eine Ladung des Fahrzeugs auf, wobei die Informationen besonders bevorzugt in einem Speicher des Fahrzeugsicherheitssystems vorgespeichert sind. Durch die fahrzeugspezifischen Informationen und/oder die Ladungsinformationen wird es Rettungskräften ermöglicht, auf die Informationen abgestimmte Hilfsmittel und Bergungsgeräte für die Bergung bereitzustellen.

In einer weiteren bevorzugten Ausführungsform weist das Fahrzeugsicherheitssystem ferner eine Zugbefestigung auf, die zum Befestigen einer externen Zugvorrichtung ausgebildet ist, wobei die Steuereinheit dazu ausgebildet ist, zu ermitteln, ob eine Zugkraft an der Zugbefestigung anliegt und die Feststellbremse in die Bremsstellung zu bringen, wenn eine Zugkraft anliegt. Es kann jedoch auch vorgesehen sein, dass die Zugbefestigung eine rein mechanische Zugbefestigung ist. Vorzugsweise ist die Zugbefestigung an einer Fahrerkabine des Fahrzeugs, insbesondere unter einer Motorhaube des Fahrzeugs, angeordnet.

Gemäß einem zweiten Aspekt löst die Erfindung die eingangs genannte Aufgabe durch ein Verfahren zum Sichern eines Fahrzeugs, insbesondere Nutzfahrzeugs, mit einem Fahrzeugsicherheitssystem bei einem Unfall, aufweisend die Schritte: Erfassen von Fahrzeugdaten mittels einer Sensoreinheit, Bereitstellen der Fahrzeugdaten an einer Steuereinheit, Ermitteln eines Unfalls des Fahrzeugs durch die Steuereinheit unter Verwendung der Fahrzeugdaten, Verbringen einer Feststellbremse des Fahrzeugs in eine Bremsstellung durch die Steuereinheit, wenn die Steuereinheit einen Unfall des Fahrzeugs ermittelt, dadurch gekennzeichnet, dass die Fahrzeugdaten eine Drehlage des Fahrzeugs repräsentieren. Bevorzugt erfolgt das Bereitstellen der Fahrzeugdaten an der Steuereinheit mittels eines Fahrzeugdatenbussystems des Fahrzeugs. Vorzugsweise ist das Fahrzeugdatenbussystem ein CAN-Bussystem, ein LIN-Bussystem, ein FlexRay-Bussystem und/oder ein MOST-Bussystem. Es kann dabei vorgesehen sein, dass die Steuereinheit die Fahrzeugdaten an der Sensoreinheit abfragt und/oder dass die Sensoreinheit die Fahrzeugdaten an die Steuereinheit sendet. Vorzugsweise ist das Fahrzeugsicherheitssystem ein Fahrzeugsicherheitssystem gemäß dem ersten Aspekt der Erfindung.

Vorzugsweise weist der Schritt Ermitteln eines Unfalls des Fahrzeugs durch die Steuereinheit unter Verwendung der Fahrzeugdaten auf: Ermitteln eines Werts einer Drehbeschleunigung des Fahrzeugs durch die Steuereinheit basierend auf den ersten Fahrzeugdaten, Vergleichen der ermittelten Drehbeschleunigung mit einem vordefinierten Grenzwert, und Bestimmen eines Unfalls des Fahrzeugs, wenn der Wert der Drehbeschleunigung den vordefinierten Grenzwert überschreitet. Aufgrund hoher auftretender Energien sind Unfälle meist durch besonders hohe Beschleunigungswerte gekennzeichnet. Überschlägt sich beispielsweise ein Fahrzeug, kommt es zu sehr hohen Werten einer Winkelbeschleunigung um die Querachse und/oder Längsachse des Fahrzeugs. Ein solcher hoher Wert der Beschleunigung liegt vorzugsweise über einem vordefinierten Grenzwert, so dass die Steuereinheit ermittelt, dass das Fahrzeug in einen Unfall verwickelt ist.

In einer bevorzugten Weiterbildung weist der Schritt Ermitteln eines Unfalls des Fahrzeugs durch die Steuereinheit unter Verwendung der Fahrzeugdaten auf: Ermitteln einer absoluten Lage des Fahrzeugs durch die Steuereinheit basierend auf den ersten Fahrzeugdaten, Ermitteln ob die ermittelte absolute Lage des Fahrzeugs in einem vordefinierten Soll-Lagebereich des Fahrzeugs ist, und Bestimmen eines Unfalls des Fahrzeugs, wenn die ermittelte absolute Lage nicht in dem Soll-Lagebereich, vorzugsweise für einen vordefinierten Zeitraum, des Fahrzeugs ist. Vorzugsweise ist die absolute Lage in dem vordefinierten Soll-Lagebereich, wenn das Fahrzeug in einer regulären Fahrposition ist. Bevorzugt ist das Fahrzeug nicht in dem Soll-Lagebereich, wenn das Fahrzeug umgekippt ist und/oder eines oder mehrerer der Räder des Fahrzeugs nicht belastet sind.

Vorzugsweise weist die Sensoreinheit einen Drehratensensor auf. Der Drehratensensor ist dann bevorzugt zum Bereitstellen der ersten Fahrzeugdaten ausgebildet.

Ferner bevorzugt weist die Sensoreinheit einen Achslastsensor auf. Wenn die Sensoreinheit einen Achslastsensor aufweist, weist der Schritt Ermitteln eines Werts der Drehbeschleunigung des Fahrzeugs durch die Steuereinheit basierend auf den ersten Fahrzeugdaten vorzugsweise auf: Ermitteln einer ersten Achslastverteilung des Fahrzeugs zu einem ersten Zeitpunkt, Ermitteln einer zweiten Achslastverteilung des Fahrzeugs zu einem zweiten Zeitpunkt, Ermitteln einer Achslaständerung aus der ersten Achslastverteilung und der zweiten Achslastverteilung, Ermitteln einer Achslaständerungsrate basierend auf der Achslaständerung und einem von dem ersten Zeitpunkt bis zu dem zweiten Zeitpunkt verstrichenen Zeitintervall, und Ermitteln einer Drehbeschleunigung des Fahrzeugs basierend auf der Achslaständerungsrate. Es soll verstanden werden, dass die Achslastverteilung auch eine Lastverteilung auf einzelne Räder des Fahrzeugs repräsentieren kann. Ferner kann die Sensoreinheit auch mehrere Achslastsensoren, besonders bevorzugt einen Achslastsensor je Reifen des Fahrzeugs, aufweisen. Der Achslastsensor kann beispielsweise ein in einem Luftfederbalg eines Luftfederungssystems angeordneter Drucksensor sein.

In einer bevorzugten Weiterbildung weist der Schritt Ermitteln einer absoluten Lage des Fahrzeugs durch die Steuereinheit basierend auf den ersten Fahrzeugdaten auf: Ermitteln einer absoluten Achslast des Fahrzeugs, Vergleichen der absoluten Achslast des Fahrzeugs mit einer vordefinierten minimalen Achslast des Fahrzeugs, Ermitteln, dass das Fahrzeug umgekippt ist, wenn die absolute Achslast des Fahrzeugs die vordefinierte minimale Achslast unterschreitet, vorzugsweise länger als für einen vordefinierten Zeitraum unterschreitet. Kippt das Fahrzeug, werden die Achsen des Fahrzeugs für einen unfallabhängigen Zeitraum oder dauerhaft entlastet. Dabei mangelt es oftmals selbst an einer Belastung der Achsen durch ein Eigengeweicht des Fahrzeugs. Eine solche Situation ist in einer regulären Betriebssituation nicht vorgesehen und repräsentiert daher ein Umkippen und/oder einen Unfall des Fahrzeugs. Ebenso ist es beispielsweise bei einem Heckaufprall möglich, dass aufgrund von Trägheitskräften eine Hinterachse des Fahrzeugs dauerhaft oder temporär belastet oder entlastet wird.

Gemäß einer bevorzugten Ausführungsform weist das Verfahren ferner auf: Bereitstellen von Fahrzeugsignalen eines Fahrzeugsubsystems, vorzugsweise eines Raddrehzahlsensors, eines Motorsteuergeräts, einer Hauptsteuereinheit des Fahrzeugs, eines Öldrucksensors, eines Kühlmittelsensors, eines Koppelkraftsensors und/oder eines Knickwinkelsensors, Vergleichen des Fahrzeugsignals und/oder eines Zeitverlaufs des Fahrzeugsignals mit einem vorbestimmten Signalkriterium durch die Steuereinheit, wobei der Schritt Ermitteln eines Unfalls des Fahrzeugs durch die Steuereinheit unter Verwendung der Fahrzeugdaten aufweist: Ermitteln eines Unfalls des Fahrzeugs basierend auf den Fahrzeugdaten und dem Vergleich des Fahrzeugsignals und/oder des Zeitverlaufs des Fahrzeugsignals mit dem vorbestimmten Signalkriterium. Der Zeitverlauf des Fahrzeugsignals beschreibt vorzugsweise eine zeitliche Folge von Fahrzeugsignalen. Vorzugsweise ist die Folge stetig, es kann jedoch auch vorgesehen sein, dass der Zeitverlauf des Fahrzeugsignals ein digitaler Zeitverlauf ist. Ferner kann das Ermitteln eines Unfalls auch unter Verwendung von aus dem Zeitverlauf des Fahrzeugsignals abgeleiteter Daten erfolgen.

Vorzugsweise erfolgt das Schalten der Feststellbremse in die Bremsstellung durch die Steuereinheit nur dann, wenn das Fahrzeugsignal und/oder der Zeitverlauf des Fahrzeugsignals das vorbestimmte Signalkriterium erfüllen. Vorzugsweise ist das Signalkriterium erfüllt, wenn ein vorbestimmter Anteil von Fahrzeugsignalen einen vorbestimmten Grenzwert unterschreitet oder überschreitet. Ebenso bevorzugt kann das Signalkriterium erfüllt sein, wenn der Zeitverlauf des Fahrzeugsignals eine vordefinierte Änderungsrate aufweist. Beispielsweise kann ein starker Abfall eines Öldrucksignals eines Motors des Fahrzeugs auf eine Leckage eines Öldrucksystems hinweisen, die durch einen Unfall des Fahrzeugs bedingt ist. In einer bevorzugten Ausgestaltung ist das Signalkriterium erfüllt, wenn das Fahrzeugsignal ausbleibt. Bei einem Unfall werden häufig Subsysteme des Fahrzeugs zerstört, sodass diese keine Fahrzeugsignale mehr bereitstellen können. Somit kann das Ausbleiben eines Fahrzeugsignals auf einen Unfall des Fahrzeugs hinweisen. Vorzugsweise kann die Steuereinheit daher dazu ausgebildet sein, das Ermitteln eines Unfalls basierend auf dem Ausbleiben eines Fahrzeugsignals durchzuführen. Bevorzugt wird ein Unfall nur dann ermittelt, wenn zumindest zwei voneinander unabhängige Fahrzeugsignale ausbleiben. Ferner bevorzugt kann das Signalkriterium erfüllt sein, wenn eine zentrale Steuereinheit des Fahrzeugs ein Time-Out-Signal bereitstellt. Die zentrale Steuereinheit stellt vorzugsweise ein Time-Out-Signal bereit, wenn ein Fahrzeugsubsystem kein Signal mehr bereitstellt. Dies ist insbesondere wünschenswert, wenn eines oder mehrere Fahrzeugsignale mittels der zentralen Steuereinheit an dem Fahrzeugsicherheitssystem bereitgestellt werden.

In einer bevorzugten Ausgestaltung ist das Fahrzeugsignal ein Motordrehzahlsignal, ein Öldrucksignal, ein Raddrehzahlsignal, ein Kühlwasserstandssignal, ein Knickwinkelsignal, ein Koppelkraftsignal, ein Lenkwinkelsignal, ein Beschleunigungssignal, ein Airbag-Signal und/oder ein Bremssignal des Fahrzeugs. Vorzugsweise ist das Bremssignal ein Notbremssignal. Ein Airbag-Signal repräsentiert bevorzugt ein Auslösen eines Airbags des Fahrzeugs. Ferner kann ein Airbag-Signal auch ein Signal sein, aufgrund dessen eine Airbagsteuerung ein Auslösen des Airbags veranlasst.

Vorzugsweise weist das Verfahren ferner auf: Betätigen eines Fahrpedals des Fahrzeugs, Bereitstellen eines Fahrsignals durch das Fahrpedal in Antwort auf das Betätigen, und Lösen der Feststellbremse durch die Steuereinheit, wenn ein Fahrsignal bereitgestellt wird.

In einer bevorzugten Ausführungsform weist das Verfahren ferner auf: Auslösen eines Notrufs, wenn ein Unfall des Fahrzeugs ermittelt wird. Besonders bevorzugt weist das Auslösen eines Notrufs ein Bereitstellen eines Notrufsignals an einer Kommunikationseinrichtung des Fahrzeugs auf. Ferner bevorzugt weist das Auslösen eines Notrufs ein Ermitteln der Position des Fahrzeugs mittels der Steuereinheit des Fahrzeugsicherheitssystems und ein Senden von Notrufsignalen auf, die eine Position des Fahrzeugs repräsentieren.

Gemäß einem dritten Aspekt löst die Erfindung die eingangs genannte Aufgabe mit einem Fahrzeug, insbesondere Nutzfahrzeug, aufweisend ein Fahrzeugsicherheitssystem gemäß dem ersten Aspekt der Erfindung, das zum Ausführen eines Verfahrens gemäß dem zweiten Aspekt der Erfindung ausgebildet ist. Es soll verstanden werden, dass Fahrzeugsicherheitssystem gemäß dem ersten Aspekt der Erfindung, das Verfahren zum Sichern eines Fahrzeugs gemäß dem zweiten Aspekt der Erfindung sowie das Fahrzeug gemäß dem dritten Aspekt der Erfindung gleiche oder ähnliche Unteraspekte aufweisen, wie sie insbesondere in den abhängigen Ansprüchen niedergelegt sind. Insofern wird für diese Aspekte vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine schematische Darstellung eines Fahrzeugs mit einem Fahrzeugsicherheitssystem gemäß einem ersten Ausführungsbeispiel;
- Figur 2A: eine schematische Darstellung einer Gier-Bewegung des Fahrzeugs gemäß dem ersten Ausführungsbeispiel;
- Figur 2B: eine schematische Darstellung einer Nick-Bewegung des Fahrzeugs gemäß dem ersten Ausführungsbeispiel;
- Figur 2C: eine schematische Darstellung einer Roll-Bewegung des Fahrzeugs gemäß dem ersten Ausführungsbeispiel;
- Figur 3A: eine schematische Draufsicht auf ein Fahrzeug gemäß dem ersten Ausführungsbeispiel, welches mit einem Anhänger gekoppelt ist;
- Figur 3B: eine schematische Draufsicht auf das Fahrzeug gemäß Figur 3A, wobei ein Knickwinkel zwischen Anhänger und Fahrzeug bezüglich Figur 3A verändert ist;
- Figur 4: ein schematisches Ablaufdiagramm für ein erstes bevorzugtes Ausführungsbeispiel des Verfahrens gemäß dem zweiten Aspekt der Erfindung;
- Figur 5: ein schematisches Ablaufdiagramm des Verfahrens gemäß dem ersten Ausführungsbeispiel mit Teilschritten;
- Figur 6: ein schematisches Ablaufdiagramm für ein zweites bevorzugtes Ausführungsbeispiel des Verfahrens;
- Figur 7: ein schematisches Ablaufdiagramm des Verfahrens gemäß dem ersten Ausführungsbeispiel mit Teilschritten und Subschritten;
- Figur 8: ein schematisches Ablaufdiagramm für ein drittes bevorzugtes Ausführungsbeispiel des Verfahrens, das eine Weiterbildung des ersten oder zweiten Ausführungsbeispiels ist; und

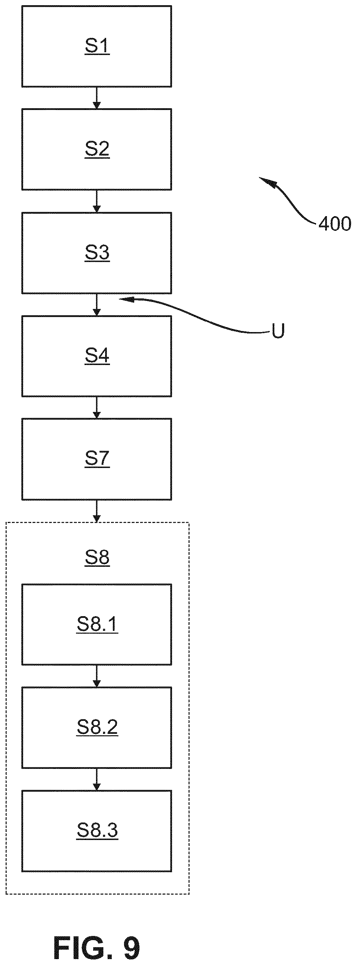

- Figur 9: ein schematisches Ablaufdiagramm für ein viertes bevorzugtes Ausführungsbeispiel des Verfahrens, das eine Weiterbildung des ersten oder zweiten Ausführungsbeispiels ist.

Ein Fahrzeug 100, insbesondere Nutzfahrzeug 102, weist ein Bremssystem 104 auf, das hier als elektronisch steuerbares pneumatisches Bremssystem 106 ausgebildet ist. Hier weist das Bremssystem 104 einen Vorderachsbremskreis 108 und einen Hinterachsbremskreis 110 auf. Es kann jedoch auch vorgesehen sein, dass das Fahrzeug 100 einen kombinierten Bremskreis für alle Achsen des Fahrzeugs 100, zwei Bremskreise für die linke und rechte Fahrzeugseite und/oder mehr als zwei Bremskreise aufweist. Insbesondere kann das Fahrzeug 100 auch einen Anhängerbremskreis aufweisen. Zum Bremsen von Vorderrädern 112.1, 112.2 des Fahrzeugs 100, weist der Vorderachsbremskreis 108 Vorderachsbetriebsbremszylinder 114.1, 114.2 auf, die über einen Vorderachsmodulator 116 angesteuert werden. Zum Bremsen von Hinterrädern 118.1, 118.2, 118.3, 118.4, weist der Hinterachsbremskreis 110 in analoger Weise einen Hinterachsmodulator 120 und damit verbundene Hinterachsbetriebsbremszylinder 122.1, 122.2, 122.3, 122.4 auf. Die Hinterachsbetriebsbremszylinder 122.1, 122.2, 122.3, 122.4 und die Vorderachsbetriebsbremszylinder 114.1, 114.2 sind dabei Bestandteil einer Betriebsbremse 123 des Fahrzeugs 100.

Ferner umfasst das Bremssystem 104 eine Feststellbremse 124 mit Feststellbremszylindern 124.1, 124.2, 124.3, 124.4, welche hier mit den Hinterachsbetriebsbremszylindern 122.1, 122.2, 122.3, 122.4 in sogenannte Tri-Stop-Zylindern kombiniert sind. Es kann jedoch auch vorgesehen sein, dass die Feststellbremszylinder 124.1, 124.2, 124.3, 124.4 als gesonderte Feststellbremszylinder vorgesehen sind. Ferner kann die Feststellbremse 124 auch zum Bremsen von Vorderrädern 112.1, 112.2 vorgesehen sein.

Das elektronisch steuerbare pneumatische Bremssystem 106 weist ferner eine zentrale Bremssteuereinheit 126 auf, die zum Ansteuern des Vorderachsbremskreises 108 und des Hinterachsbremskreis 110 vorgesehen ist. Die zentrale Bremssteuereinheit 126 ist mit einem Bremswertgeber 128 verbunden. Durch betätigen des Bremswertgebers 128 kann ein Fahrer des Fahrzeugs 100 eine Bremsvorgabe SB an der zentralen Bremssteuereinheit 126 bereitstellen, welche dann ein Vorderachsbremssignal SBV an dem Vorderachsbremskreis 108 und ein Hinterachsbremssignal SBH an dem Hinterachsbremskreis 110 bereitstellt. Die Betriebsbremszylinder 114, 122 werden dann von den jeweiligen Vorder- bzw. Hinterachsbremsmodulatoren 116, 120 entsprechend dem jeweils zugehörigen Vorderachsbremssignal SBV bzw. Hinterachsbremssignal SBH angesteuert. Ferner kann die zentrale Bremssteuereinheit 126 den Vorderachsbremskreis 108 und den Hinterachsbremskreis 110 auch basierend auf einer elektronischen Bremsvorgabe SB2 ansteuern, die von einer Hauptsteuereinheit 130 des Fahrzeugs 100 bereitgestellt wird. Ferner ist die zentrale Bremssteuereinheit 126 dazu ausgebildet, ein Feststellbremssignal SBF für die Feststellbremse 124 bereitzustellen. In diesem Ausführungsbeispiel stellt die zentrale Bremssteuereinheit 126 das Feststellbremssignal SBF an dem Hinterachsmodulator 120 bereit, welcher dazu ausgebildet ist, die Feststellbremszylinder 124.1, 124.2, 124.3, 124.4 basierend auf dem Feststellbremssignal SBF anzusteuern.

Zum Sichern des Fahrzeugs 100 nach einem Unfall U, weist das Fahrzeug 100 ein Fahrzeugsicherheitssystem 1 auf. Eine Steuereinheit 2 des Fahrzeugsicherheitssystems 1 ist mit der zentralen Bremssteuereinheit 126 verbunden und zum Schalten der Feststellbremse 124 des Fahrzeugs 100 in eine Bremsstellung BS ausgebildet. Zum Schalten der Feststellbremse 124 in die Bremsstellung BS stellt die Steuereinheit 2 ein Sicherheits-Feststellbremssignal SSFB an der zentralen Bremssteuereinheit 126 bereit, die dazu ausgebildet ist, in Antwort auf das Breitstellen des Sicherheits-Feststellbremssignals SSFB das Feststellbremssignal SBF für die Feststellbremse 124 bereitzustellen. Es kann jedoch auch vorgesehen sein, dass die Steuereinheit 2 mit dem Hinterachsmodulator 120 und/oder mit den Feststellbremszylindern 124.1, 124.2, 124.3, 124.4 der Feststellbremse 124 verbunden ist, und das Sicherheits-Feststellbremssignal SSFB unmittelbar an dem Hinterachsmodulator 120 und/oder den Feststellbremszylindern 124.1, 124.2, 124.3, 124.4 daran bereitstellt.

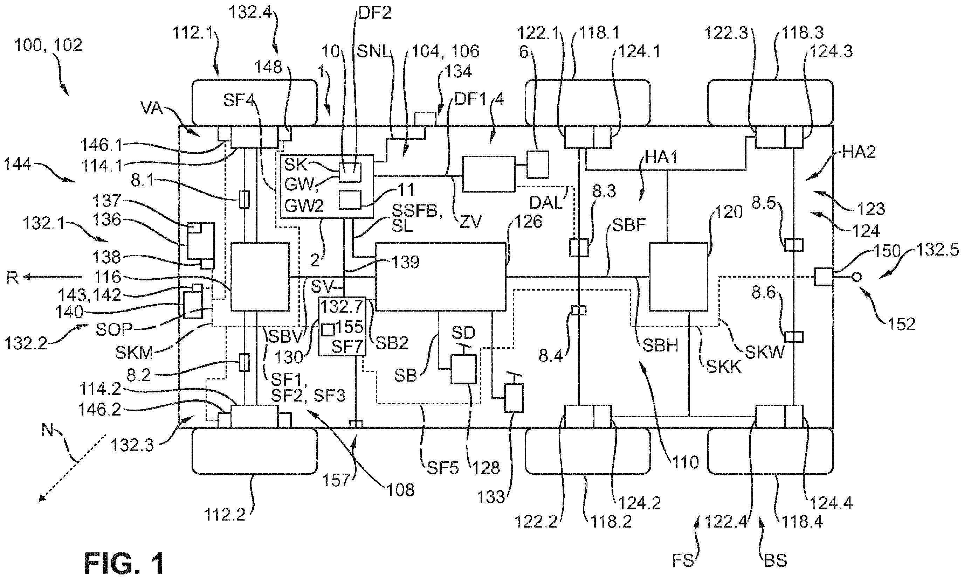

Eine Sensoreinheit 4 des Fahrzeugsicherheitssystems 1 ist mit der Steuereinheit 2 verbunden. Die Sensoreinheit 4 ist dazu ausgebildet, erste Fahrzeugdaten DF1 bereitzustellen, die eine Drehlage LD des Fahrzeugs 100 repräsentieren. Die Sensoreinheit 4 weist hier einen Drehratensensor 6 auf, der zum Ermitteln einer Änderung der Drehlage LD des Fahrzeugs 100 um eine Hochachse AH, Querachse AQ und/oder eine Längsachse AL des Fahrzeugs 100 (Achsen in Figur 1 nicht dargestellt) ausgebildet ist. Ferner weist die Sensoreinheit 4 sechs Achslastsensoren 8.1, 8.2, 8.3, 8.4, 8.5, 8.6 auf, die zum Ermitteln einer Achslast des Fahrzeugs 100 ausgebildet sind. Hier sind die Achslastsensoren 8.1, 8.2, 8.3, 8.4, 8.5, 8.6, dazu ausgebildet eine jeweilige Radlast auf den Vorderrädern 112.1, 112.2 und den Hinterrädern 118.1, 118.2, 1803, 118.4 des Fahrzeugs 100 zu ermitteln. Es kann jedoch auch vorgesehen sein, dass die Achslastsensoren 8.1, 8.2, 8.3, 8.4, 8.5, 8.6 zum Ermitteln einer Achslast auf den Rädern einer Achse ausgebildet sind. Es soll verstanden werden, dass die Achslastsensoren 8.1, 8 2, 803, 8 und 4, 8.5, 8.6, und/oder der Drehratensensor 6 auch dazu ausgebildet sein können, Daten bereitzustellen und, dass die Steuereinheit 2 dazu ausgebildet ist, basierend auf den bereitgestellten Daten eine Änderung der Drehlage LD des Fahrzeugs 100 und/oder einer Achslast des Fahrzeugs 100 zu ermitteln. Ferner kann die Sensoreinheit 4 auch mehrere Drehratensensoren 6 aufweisen.

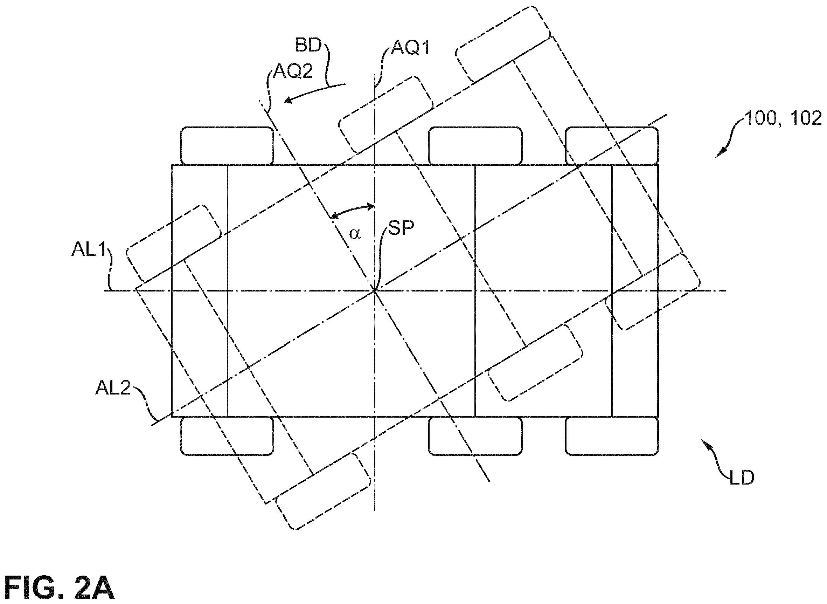

Die Figuren 2A - 2C verdeutlichen eine Änderung der Drehlage LD des Fahrzeugs 100, wobei einige Komponenten des Fahrzeugs 100 aus Übersichtsgründen in den Figuren 2A - 2C nicht dargestellt sind. Figur 2A zeigt eine Änderung der Drehlage LD des Fahrzeugs 100 um dessen Hochachse AH von einer Ausgangsposition (durchgezogene Linien) zu einer Endposition (Strichlinien). In Figur 2A weist die Hochachse AH des Fahrzeugs 100 aus der Bildebene hinaus. Änderungen der Drehlage LD des Fahrzeugs 100 um die Hochachse AH werden häufig auch als Gier-Bewegungen bezeichnet. Die Gier-Bewegung kann durch einen Gierwinkel α charakterisiert werden, der zwischen einer Lage der Querachse AQ1 in der Ausgangsposition und einer Lage der Querachse AQ2 in der Endposition gemessen werden kann. In analoger Weise kann der Gierwinkel α auch zwischen der Längsachse AL1 in der Ausgangsposition und der Längsachse AL2 der Endposition ermittelt werden.

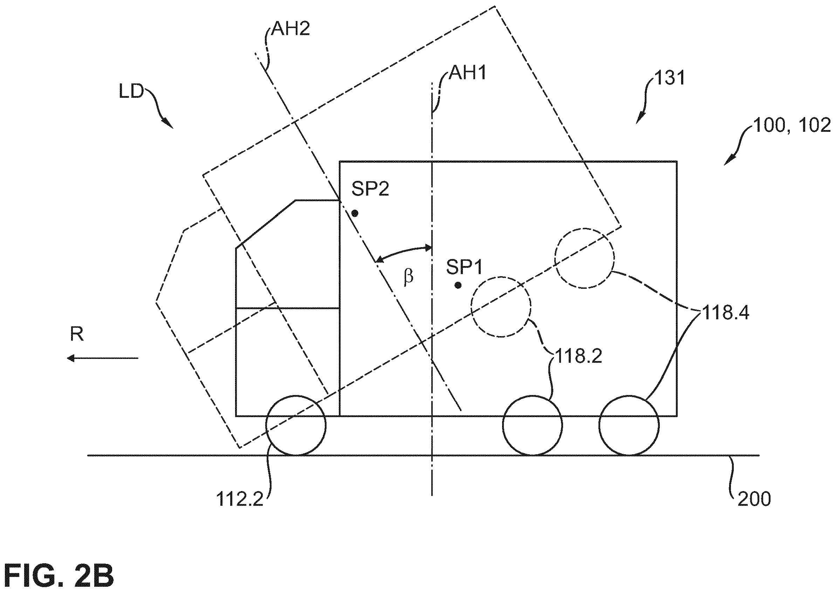

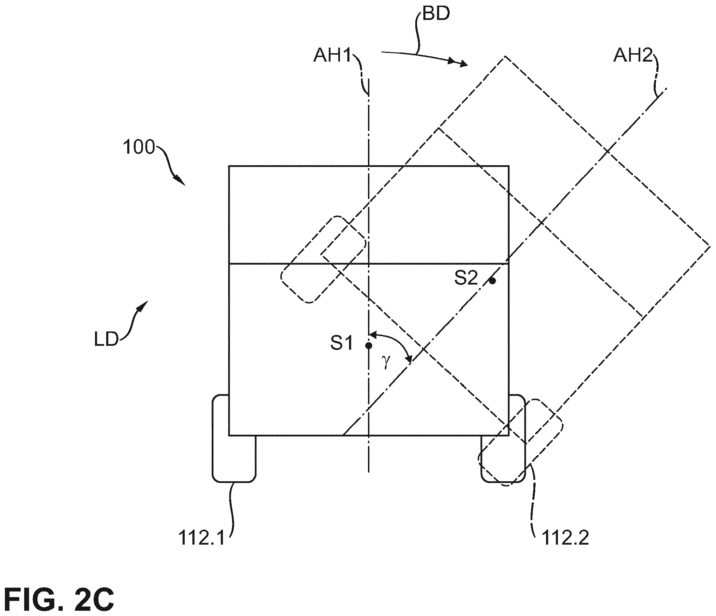

Figur 2B verdeutlicht eine Änderung der Drehlage LD des Fahrzeugs 100 um dessen Querachse AQ, welche in Fig. 2B senkrecht zur Bildebene ist. In der Ausgangsposition (durchgezogene Linien) steht das Fahrzeug 100 sowohl mit den Vorderrädern 112.1, 112.2 als auch mit den Hinterrädern 118.1 118.2, 118.3, 118.4 auf einem Untergrund 200, wobei die Hochachse AH1 des Fahrzeugs 100 senkrecht zum Untergrund 200 ist. In der Endposition (Strichlinien) Ist die Drehlage LD des Fahrzeugs 100 im Vergleich zur Ausgangsposition verändert, wobei die Änderung der Drehlage LD durch einen Nickwinkel β, der zwischen der Lage der Hochachse HA1 in der Ausgangsposition und der Lage der Hochachse HA2 in der Endposition gemessen wird, charakterisiert werden kann. Ferner kann der Nickwinkel β auch zwischen der Längsachse in Ausgangsposition und der Längsachse in Endposition (in Figur 2 nicht dargestellt) ermittelt werden. Eine Änderung der Drehlage LD des Fahrzeugs 100 um dessen Querachse AQ wird auch als Nick-Bewegung bezeichnet. In diesem Ausführungsbeispiel sind die Hinterräder 118.1, 118.2, 118.3, 118.4 in der Endposition von dem Untergrund 200 abgehoben. Dies ist beispielsweise kurzzeitig möglich, wenn das Fahrzeug 100 auf ein vorstehendes Hindernis auffährt. Es soll verstanden werden, dass Eine Nick-Bewegung auch ohne Abheben von Rädern 112, 118 beispielsweise durch ein partielles oder vollständiges Entlasten einer Federung von Hinterrädern 118 möglich ist.

Eine Roll-Bewegung des Fahrzeugs 100, die einer Änderung der Drehlage LD des Fahrzeugs 100 um dessen Längsachse AL entspricht, zeigt Figur 2C. Die Längsachse AL des Fahrzeugs ist in Fig. 2C senkrecht zur Bildebene angeordnet. Die Roll-Bewegung wird charakterisiert durch einen Rollwinkel γ, gemessen zwischen einer Hochachse HA1 in der Ausgangsposition (durchgezogenen Linien) und einer Lage der Hochachse HA2 In der Endposition (gestrichelte Linien). Der Rollwinkel γ kann auch zwischen der Querachse QA des Fahrzeugs in der Ausgangsposition und der Endposition ermittelt werden (in Figur 2C nicht dargestellt).

Ist das Fahrzeug 100 in einen Unfall U verwickelt, wirken Kräfte (nicht dargestellt) auf das Fahrzeug 100, welche nicht in dem Massenschwerpunkt SP des Fahrzeugs 100 angreifen und Gier-Bewegungen und/oder Nick-Bewegungen und/oder Roll-Bewegungen des Fahrzeugs 100 verursachen. Durch die Gier-, Nick- und/oder Roll-Bewegungen ändert sich die Drehlage LD des Fahrzeugs 100. Die Sensoreinheit 4 ist dazu ausgebildet, erste Fahrzeugdaten DF1 bereitzustellen, die die Drehlage LD des Fahrzeugs 100 repräsentieren. Vorzugsweise ist die Sensoreinheit 4 dazu ausgebildet, erste Fahrzeugdaten DF1 bereitzustellen, die Gier-Bewegungen, Nick-Bewegungen und/oder Roll-Bewegungen des Fahrzeugs 100 repräsentieren.

Der Drehratensensor 6 der Sensoreinheit 4 ist vorzugsweise dazu ausgebildet, Daten bereitzustellen, die Gier-Bewegungen, Nick-Bewegungen und/oder Roll-Bewegungen des Fahrzeugs 100 repräsentieren. Vorzugsweise ist der Drehratensensor 6 der Sensoreinheit 4 dazu in einem Schwerpunkt SP des Fahrzeugs 100 angeordnet. Der Drehratensensor 6 kann jedoch auch an einer beliebigen Position des Fahrzeugs 100 angeordnet sein. Ferner kann vorgesehen sein, dass die Sensoreinheit 4 mehrere Drehratensensoren 6 aufweist, wobei vorzugsweise jeweils zumindest ein Drehratensensor 6 für die Gier-Bewegung, Nick-Bewegung und Roll-Bewegung des Fahrzeugs 100 vorgesehen ist. Vorzugsweise kann ein erster Drehratensensor 6 auch Daten bereitstellen, die eine Bewegung um zwei Fahrzeugachsen AH, AQ, AL repräsentieren, und ein zweiter Drehratensensor 6 ist zum Bereitstellen von Daten ausgebildet, die eine Bewegung um die übrige dritte Fahrzeugachse repräsentieren.

Besonders bevorzugt ist der Drehratensensor 6 dazu ausgebildet eine Änderungsrate der Drehlage LD des Fahrzeugs 100 zu ermitteln und/oder erste Fahrzeugdaten DF1 bereitzustellen, die eine Änderungsrate der Drehlage LD repräsentieren. In der Regel wirken während eines Unfalls U besonders starke Kräfte auf das Fahrzeug 100, welche in besonders hohen Änderungsraten der Drehlage LD resultieren. Fährt beispielsweise ein zweites Fahrzeug auf das stehende Fahrzeug 100 auf, wird das Fahrzeug 100 ruckartig in Fahrtrichtung R beschleunigt. Aufgrund von Trägheitseffekten kommt es dabei zu einer Nick-Bewegung des Fahrzeugs 100, welche in einer besonders hohen Änderungsrate des Nickwinkels β resultiert. In analoger Weise kommt es bei einem Seitenaufprall, insbesondere außermittigen Seitenaufprall, eines Fahrzeugs auf das stehende Fahrzeug 100 zu einer Gier-Bewegung, die durch eine hohe Änderungsrate des Gierwinkels α gekennzeichnet ist. Ferner kann ein Seitenaufprall auch eine Roll-Bewegung des Fahrzeugs 100 verursachen. Auch ein Überschlag des Fahrzeugs 100 ist durch eine Roll-Bewegung des Fahrzeugs 100 mit großen Änderungsrate des Rollwinkels γ gekennzeichnet. Die Änderungsraten beschreiben also einen Zeitverlauf der Fahrzeugdaten.

Vorzugsweise ist die Steuereinheit 2 auch dazu ausgebildet, die Änderungsrate der Gier-Bewegung, Nick-Bewegung und Roll-Bewegung basierend auf den von dem Drehratensensor 6 bereitgestellten ersten Fahrzeugdaten DF1 zu ermitteln. Die ersten Fahrzeugdaten DF1 repräsentieren dann eine Änderungsrate des Gierwinkels α, des Nickwinkels β und/oder des Rollwinkels γ. Zum Ermitteln der Gier-Bewegung, Nick-Bewegung und/oder Roll-Bewegung kann vorgesehen sein, dass die Steuereinheit 4 eine Speicher 10 aufweist, der zum Speichern der die Drehlage LD des Fahrzeugs 100 repräsentierenden ersten Fahrzeugdaten DF1 ausgebildet ist. Die Steuereinheit 4 ist dann dazu ausgebildet, die Änderungsrate der Drehlage LD des Fahrzeugs 100 basierend auf den von der Sensoreinheit 6 bereitgestellten Fahrzeugdaten DF1 und/oder basierend auf den in dem Speicher 10 gespeicherten Fahrzeugdaten DF1 zu ermitteln. Es kann jedoch auch vorgesehen sein, dass der Drehratensensor 6 dazu ausgebildet ist, die Änderungsrate der Drehlage LD des Fahrzeugs 100 zu ermitteln und an der Steuereinheit 2 bereitzustellen.

Bevorzugt ist die Steuereinheit 2 dazu ausgebildet, zu ermitteln, ob eine Änderungsrate der Drehlage LD des Fahrzeugs 100 einen vordefinierten Grenzwert GW übersteigt, der besonders bevorzugt in dem Speicher 10 vorgespeichert ist. Vorzugsweise liegt der Grenzwert GW außerhalb eines Wertebereichs, der durch die Änderungsraten der Drehlage LD in einem unfallfreien Fahrbetrieb des Fahrzeugs 100 definiert ist. Wenn eine basierend auf den ersten Fahrzeugdaten DF1 ermittelte Änderung der Drehlage LD des Fahrzeugs 100 den vordefinierten Grenzwert GW übersteigt, ermittelt die Steuereinheit 2, dass das Fahrzeug 100 in einen Unfall U verwickelt wird. In Antwort auf ein solches Ermitteln, stellt die Steuereinheit 2 dann das Feststellbremssignal SSFB an der zentralen Bremssteuereinheit 126 bereit, um die Feststellbremse 124 des Fahrzeugs 100 in die Bremsstellung BS zu bringen.

Der Drehratensensor 6 ist ferner dazu ausgebildet, erste Fahrzeugdaten DF1 bereitzustellen, die eine absolute Lage des Fahrzeugs 100 darstellen. Die Steuereinheit 2 ist zudem dazu ausgebildet, basierend auf den die absolute Lage des Fahrzeugs 100 repräsentierenden Fahrzeugdaten DF1 zu ermitteln, ob das Fahrzeug 100 in einen Unfall U verwickelt ist. Beispielsweise kann das Fahrzeug 100 nach einem Unfall U in der in Fig. 2C durch Strichlinien dargestellten Endposition verbleiben. Die Steuereinheit 2 kann dann dazu ausgebildet sein, zu ermitteln, dass die Endposition des Fahrzeugs 100, die eine absolute Lage darstellt, nicht einem Solllagebereich entspricht. Der Solllagebereich weist vorzugsweise einen ersten Wertebereich des Rollwinkels γ, gemessen zu einer Lage der Hochachse HA, die Senkrecht zum Untergrund 200 ist, und einer aktuellen Hochachse HA von -30° bis + 30°, bevorzugt -20° bis +20°, besonders bevorzugt -10° bis +10° auf. Ferner bevorzugt weist der Solllagebereich einen zweiten Wertebereich des Nickwinkels β, gemessen zu einer Lage der Hochachse HA, die Senkrecht zum Untergrund 200 ist, und einer aktuellen Hochachse HA von -30° bis + 30°, bevorzugt -20° bis +20°, besonders bevorzugt -10° bis +10° auf. Der Solllagebereich kann also einen Wertebereich des Nickwinkels β und/oder des Rollwinkels γ aufweisen. Liegt ein ermittelter Wert des Nickwinkels β und/oder des Rollwinkels γ des Fahrzeugs 100 nicht in dem jeweiligen Solllagebereich, kann ein Unfall U des Fahrzeugs 100 durch die Steuereinheit 2 ermittelt werden. Ferner kann die Steuereinheit 2 dazu ausgebildet sein, einen Zeitverlauf der ersten Fahrzeugdaten DF1 zu erfassen und basierend auf dem Zeitverlauf der ersten Fahrzeugdaten DF1 zu ermitteln, ob das Fahrzeug 100 in einen Unfall U verwickelt ist. Besonders bevorzugt ist die Steuereinheit 2 dazu ausgebildet, aus den ersten Fahrzeugdaten DF1 eine Änderungsrate der Drehlage LD des Fahrzeugs 100 zu ermitteln. Stellt beispielsweise der Drehratensensor 6 in mehreren aufeinanderfolgenden Zeitpunkten erste Fahrzeugdaten DF1 bereit, die eine absolute Drehlage LD des Fahrzeugs 100 repräsentieren, kann die Steuereinheit 2 aus einem Vergleich der aufeinanderfolgenden Fahrzeugdaten DF1 die Änderungsrate der Drehlage LD ermitteln.

Gemäß diesem Ausführungsbeispiel weist die Sensoreinheit 4 des Fahrzeugsicherheitssystems 1 neben dem Drehratensensor 6 ferner auch Achslastsensoren 8.1, 8.2, 8.3, 8.4, 8.5, 8.6 auf. Es soll jedoch verstanden werden, dass die Sensoreinheit 4 auch nur Achslastsensoren 8.1, 8.2, 8.3, 8.4, 8.5, 8.6 und/oder weitere Sensoren aufweisen kann. Die Achslastsensoren 8.1, 8.2, 8.3, 8.4, 8.5, 8.6 sind dazu ausgebildet, erste Fahrzeugdaten DF1 bereitzustellen, die eine relative und/oder absolute Achslast auf den Vorderrädern 112.1, 112.2 und den Hinterrädern 118.1, 118.2, 118.3, ein 118.4 des Fahrzeugs 100 repräsentieren. Es kann jedoch auch vorgesehen sein, dass das Fahrzeug 100 weniger als sechs Achslastsensoren 8 aufweist. Bevorzugt weist die Sensoreinheit 4 jeweils zumindest einen Achslastsensor 8 pro Achse VA, HA1, HA2 des Fahrzeugs 100 auf. Besonders bevorzugt weist die Sensoreinheit 4 je einen Achslastsensor 8 pro Rad 112.1, 102, 118.1, 118.2, 118.3, 118.4 des Fahrzeugs 100 auf. Vorzugsweise können die Achslastsensoren 8 als Drucksensoren in Luftfederelementen des Fahrzeugs 100 ausgebildet sein.

Wie in Figur 2C verdeutlicht bedingt eine Änderung der Drehlage LD des Fahrzeugs 100 eine Verlagerung des Schwerpunkts SP1 des Fahrzeugs 100 aus der Ausgangsposition zu einer Lage des Schwerpunkts SP2 in einer Endposition. Hierdurch ändert sich auch eine Belastung der Achsen und Räder 114.1, 114.2, 118.1, 118.2, 118.3, 118.4 des Fahrzeugs 100, welche durch die Masse des Fahrzeugs 100 und die Ladung des Fahrzeugs 100 hervorgerufen wird. Beispielsweise sind die Vorderräder 112.1, 112.2 des Fahrzeugs 100 in der in Figur 2C dargestellten Ausgangsposition (durchgezogene Linien) gleichmäßig belastet, wohingegen in der Endposition (Strichlinien) das linke Vorderrad 112.2 stärker belastet ist. Durch die in Figur 2B verdeutlichte Nick-Bewegung werden die in der Ausgangsposition (durchgezogene Linien) belasteten Hinterräder 118.1, 118.2, 118.3, 118.4 des Fahrzeugs 100 von dem Untergrund 200 abgehoben, sodass diese in der Endposition (Strichlinien) vollständig entlastet sind. Eine Änderung der Drehlage LD des Fahrzeugs 100 bedingt also eine Änderung der Achslast, sodass von den Achslastsensoren 8.1, 8.2, 8.3, 8.4, 8.5, 8.6 bereitgestellte Fahrzeugdaten die Änderung der Drehlage LD des Fahrzeugs 100 repräsentieren.

Die Steuereinheit 2 kann dann basierend auf den von den Achslastsensoren 8.1, 8.2, 8.3, 8.4, 8.5, 8.6 bereitgestellten ersten Fahrzeugdaten DF1 ermitteln, ob das Fahrzeug 100 in einen Unfall U verwickelt ist. Hierbei kann die Steuereinheit 2 vorzugsweise dazu ausgebildet sein, einen Zeitverlauf der Achslaständerung ΔALV, das heißt eine Achslaständerungsrate ALR, zu berücksichtigen. Hierbei indizieren insbesondere schnelle Änderung der Achslast, die durch große Achslaständerungsraten ALR gekennzeichnet sind, einen Unfall U des Fahrzeugs 100. Es soll jedoch verstanden werden, dass die Steuereinheit 2 auch dazu ausgebildet sein kann, basierend auf langsamen Änderungen und/oder absoluten Werten der Achslast einen Unfall U des Fahrzeugs 100 zu ermitteln. Beispielsweise sind die Achsen VA, HA1, HA2 des Fahrzeugs 100 vollständig entlastet, wenn das Fahrzeug 100 umgekippt ist und auf dem Fahrzeugdach 131 zum Liegen kommt. Im regulären Fahrbetrieb ist eine vollständige Entlastung der Achsen des Fahrzeugs 100 nicht vorgesehen, sodass die Steuereinheit 2 basierend auf den ersten Fahrzeugdaten DF1 einen Unfall U des Fahrzeugs 100 ermitteln kann. Ermittelt die Steuereinheit 2 einen Unfall U des Fahrzeugs 100, stellt sie das Sicherheits-Feststellbremssignal SSFB an der zentralen Bremssteuereinheit 126 bereit.

Bevorzugt weist das Fahrzeugsicherheitssystem 1 ein Notrufsystem 11 auf, das hier in die Steuereinheit 2 integriert ist. Es kann jedoch auch vorgesehen sein, dass das Notrufsystem 11 separat ausgebildet ist oder, dass das Notrufsystem 11 ein Notrufsystem 11 der zentralen Hauptsteuereinheit 130 des Fahrzeugs 100 ist, das von der Steuereinheit 2 angesteuert wird. Das Notrufsystem 11 ist dazu ausgebildet, einen Notruf N auszulösen, wenn die Steuereinheit 2 basierend auf den ersten Fahrzeugdaten DF1 einen Unfall U des Fahrzeugs 100 ermittelt. Beispielsweise kann das Notrufsystem 11 eine zentrale Rettungsleitstelle informieren. Besonders bevorzugt ist das Notrufsystem 11 dazu ausgebildet, eine aktuelle Position des Fahrzeugs 100 zu senden.

In bestimmten Situation nach einem Unfall U kann es notwendig sein, das Fahrzeug 100 zu bewegen. Insbesondere kann dies der Fall sein, wenn mehrere Fahrzeuge miteinander verklemmt sind oder wenn eine Unfallstelle geräumt werden soll. Ein Bewegen des Fahrzeugs 100 wird durch das Schalten der Feststellbremse 124.1, 124.2, 124.3, 124.4 in die Bremsstellung BS verhindert. Daher kann das Fahrzeugsicherheitssystem 1 dazu ausgebildet sein, zum Lösen der Feststellbremsen 124.1, 124.2, 124.3, 124.4 ein Lösesignal SL bereitzustellen. Vorzugsweise stellt die Steuereinheit 2 des Fahrzeugsicherheitssystems 1 das Lösesignal SL bereit, wenn ein Fahrpedal 133 des Fahrzeugs 100 betätigt und ein Fahrsignal SD bereitgestellt wird. Ferner bevorzugt kann die Steuereinheit 2 das Lösesignal SL bereitstellen, wenn eine Notlöseeinrichtung 134 ein Notlösesignal SNL bereitstellt. In diesem Ausführungsbeispiel ist die Notlöseeinrichtung 134 ein an einer Seite des Fahrzeugs 100 angebrachter Schalter, der von Rettungskräften leicht erreicht werden kann. Wird die Notlöseeinrichtung 134 betätigt wird das Bremssystem 104 des Fahrzeugs 100 in eine Fahrstellung FS verbracht. Hier werden sowohl das Bremssignal SB als auch das Fahrsignal SD mittels der zentralen Bremssteuereinheit 126 an der Steuereinheit 2 des Fahrzeugsicherheitssystems 1 bereitgestellt. Es kann jedoch auch vorgesehen sein, dass das Fahrsignal SD unmittelbar von dem Fahrpedal 133 an der Steuereinheit 2 oder von der Hauptsteuereinheit 130 an der Steuereinheit 2 bereitgestellt wird.

Das Fahrzeug 100 weist hier mehrere Fahrzeugsubsysteme 132 auf. Ein erstes Fahrzeugsubsystem 132.1 des Fahrzeugs 100 umfasst einen Motor 136 und einen Motorsensor 138, vorzugsweise auch ein Motorsteuergerät 137. Der Motorsensor 138 ist dazu ausgebildet, ein erstes Fahrzeugsignal SF1 bereitzustellen, welches vorzugsweise eine Motordrehzahl des Motors 136 repräsentieren kann. Der Motorsensor 138 ist mit der Hauptsteuereinheit 130 des Fahrzeugs 100 verbunden. Die Hauptsteuereinheit 130 stellt das erste Fahrzeugsignal SF1 an der Steuereinheit 2 des Fahrzeugsicherheitssystems 1 bereit. Hierzu können die Hauptsteuereinheit 130 und die Steuereinheit 2 mittels eines Fahrzeugdatenbusses 139 verbunden sein. Es kann jedoch auch vorgesehen sein, dass der Motorsensor 138 das erste Fahrzeugsignal SF1 unmittelbar an der Steuereinheit 2 bereitstellt/oder das eine Motorsteuereinheit (nicht dargestellt) das erste Fahrzeugsignal SF1 an der Steuereinheit 2 bereitstellt.

In diesem Ausführungsbeispiel ist die Steuereinheit 2 dazu ausgebildet beim Ermitteln eines Unfalls U des Fahrzeugs 100 zumindest ein Fahrzeugsignal SF zu berücksichtigen. Vorzugsweise kann durch das Berücksichtigen zumindest eines Fahrzeugsignals SF eine Zuverlässigkeit des Ermittelns eines Unfalls U des Fahrzeugs 100 erhöht werden.

Wenn beispielsweise ein weiteres Fahrzeug auf das stehende Fahrzeug 100 auffährt, führt das Fahrzeug 100 eine ruckartige Nick-Bewegung aus, und der Drehratensensor 6 stellt erste Fahrzeugdaten DF1 bereit, die diese Nick-Bewegung repräsentieren. Die Steuereinheit 2 führt einen Vergleich der ersten Fahrzeugdaten DF1 mit einem vordefinierten Grenzwert GW aus. Wenn wie im vorliegenden Beispiel der Grenzwert GW überschritten wird, ermittelt die Steuereinheit 2 einen Unfall U des Fahrzeugs 100. Wird das Fahrzeug 100 stark beschleunigt oder abgebremst, kann das Fahrzeug 100 auch im normalen Fahrbetrieb ruckartige Nick-Bewegungen durchführen, sodass ein Ermitteln eines Unfalls U des Fahrzeugs 100 allein basierend auf den ersten Fahrzeugdaten DF1 erschwert sein kann. Durch das Berücksichtigen zumindest eines Fahrzeugsignals SF kann eine Zuverlässigkeit des Ermittelns eines Unfalls U erhöht werden. Beispielsweise kann eine ruckartige Nick-Bewegung nicht durch eine gewünschte Beschleunigung des Fahrzeugs 100 bedingt sein, wenn das erste Fahrzeugsignal SF1 eine konstante Leerlaufdrehzahl des Motors 136 repräsentiert. Ferner könnte nach dem Ermitteln einer ruckartigen Nick-Bewegung ein Motorsignal eines Motors 136 ausbleiben, wodurch ein Unfall U des Fahrzeugs 100 plausibilisiert werden könnte.

Ein zweites Fahrzeugsubsystem 132.2 des Fahrzeugs 100 umfasst einen Kühler 140 und einen Kühlmittelsensor 142, insbesondere Kühlmittelfüllstandssensor, der ein Kühlmittelsignal SKM bereitstellt. Der Kühler 140 kann beispielsweise zum Kühlen des Motors 136 des Fahrzeugs 100 ausgebildet sein. Der Kühlmittelsensor 142 ist dazu ausgebildet, ein zweites Fahrzeugsignal SF2 bereitzustellen, das einen Kühlmittelstand des Kühlers140 repräsentiert. Vorzugsweise ist das Kühlmittel als Kühlwasser ausgebildet und der Kühlmittelsensor 142 ein Kühlwassersensor 143. Analog zum ersten Fahrzeugsignal SF1 wird auch das zweite Fahrzeugsignal SF2 an der Hauptsteuereinheit 130 des Fahrzeugs 100 bereitgestellt und mittels des Fahrzeugdatenbusses 139 an der Steuereinheit 2 bereitgestellt. Es kann jedoch auch vorgesehen sein, dass der Kühlmittelsensor 142 das zweite Fahrzeugsignal SF2 unmittelbar an der Steuereinheit 2 bereitstellt. Meist sind Kühler 140 von Fahrzeugen 100 an einer Fahrzeugfront 144 angeordnet, wodurch während einer Fahrt des Fahrzeugs 100 in Fahrtrichtung R eine effektive Kühlung des Kühlmittels erreicht wird. Aufgrund der Anordnung an der Fahrzeugfront 144 wird der Kühler 140 häufig beschädigt, wenn das Fahrzeug 100 in einen Frontalaufprall verwickelt ist. Aufgrund der Beschädigung des Kühlers 140 kann oftmals Kühlmittel austreten, wodurch der Kühlmittelstand des Kühlmittels im Kühler 140 absinkt.

Vorzugsweise ist die Steuereinheit 2 dazu ausgebildet, zu bestimmen, ob ein Fahrzeugsignal SF ein vordefiniertes Signalkriterium SK erfüllt. Beispielsweise kann ein vordefiniertes Signalkriterium SK ein Absinken des Kühlmittelstands unter einen vordefinierten Grenzwert GW und/oder eine Rate sein, mit der der Kühlmittelstand sinkt. Wird beispielsweise aufgrund eines Unfalls U eine ruckartige Änderung der Drehlage LD des Fahrzeugs 100 ermittelt, kann das Ermitteln eines Unfalls U durch die Steuereinheit 2 verifiziert werden, wenn nach dem Ermitteln der Änderung der Drehlage LD der Kühlmittelstand unter einen Grenzwert GW absinkt. Die Steuereinheit 2 ist bevorzugt dazu ausgebildet, als ein Kriterium zum Ermitteln eines Unfalls U des Fahrzeugs 100 zu verwenden, wenn auf eine Änderung der Drehlage LD ein Absinken eines Kühlmittelstands folgt. In analoger Weise kann das Ermitteln eines Unfalls U auch durch das Absinken eines Motoröldrucks des Motors 136 verifiziert werden. Hierfür ist der Motorsensor 138 vorzugsweise ein Öldrucksensor 141, wobei die vom Motorsensor 138 bereitgestellte erste Fahrzeugsignal SF1, das dann ein Öldrucksignal SOP ist, einen Öldruck des Motors 136 repräsentiert. Es soll verstanden werden, dass das Fahrzeugsubsystem 132 auch mehrere Sensoren aufweisen kann, die verschiedene und/oder gleiche Parameter des Fahrzeugsubsystems 132 repräsentieren.

Zum Lenken weist das Fahrzeug 100 eine drittes Fahrzeugsubsystem 132.3 auf. Hier erfolgt das Lenken des Fahrzeugs 100 mittels Verstellen der Vorderräder 112.1, 112.2, die die Fahrtrichtung R des Fahrzeugs 100 definieren. Zum Erfassen der aktuellen Lenkposition des Fahrzeugs 100 weist das dritte Fahrzeugsubsystem 132.3 zwei Lenksensoren 146.1, 146.2 auf, die an den Vorderrädern 112.1, 112.2 angeordnet sind. Es kann jedoch auch vorgesehen sein, dass das dritte Fahrzeugsubsystem 132.3 nur einen Lenksensor 146 oder mehr als zwei Lenksensoren 146 aufweist. Ferner können die Lenksensoren 146 auch an anderen Positionen des dritten Fahrzeugsubsystems 132.3 angeordnet sein und/oder eine Lenkvorgabe erfassen. Beispielsweise kann der Lenksensor 146 den Lenkeinschlag eines Lenkrades (nicht dargestellt) erfassen. Die Lenksensoren 146.1, 146.2 stellen ein drittes Fahrzeugsignal SF3 bereit, dass eine Lenkstellung des Fahrzeugs 100 repräsentiert. Ein die Lenkstellung repräsentierendes drittes Fahrzeugsignal SF3 kann beim Ermitteln eines Unfalls U des Fahrzeugs 100 durch die Steuereinheit 2 berücksichtigt werden. In diesem Ausführungsbeispiel wir das dritte Fahrzeugsignal SF3 hierfür mittels des Fahrzeugdatenbusses 139 an der Steuereinheit 2 bereitgestellt. Das dritte Fahrzeugsignal SF3 kann beispielsweise berücksichtigt werden, um zu ermitteln, ob eine von der Steuereinheit 2, basierend auf den von der Sensoreinheit 4 bereitgestellten Fahrzeugdaten DF1, ermittelte Gier-Bewegung des Fahrzeugs 100 durch eine von einem Fahrer vorgegebene Lenkbewegung hervorgerufen wurde. Ermittelt die Steuereinheit 2 eine Gier-Bewegung des Fahrzeugs 100 und unter Berücksichtigung des dritten Fahrzeugsignals SF3, dass keine Lenkbewegung durchgeführt wurde, kann daraus auf einen Unfall U des Fahrzeugs 100 geschlossen werden. Vorzugsweise wird als ein Kriterium zum Ermitteln eines Unfalls U des Fahrzeugs 100 verwendet, wenn ein Fahrzeugsignal SF (vorzugsweise das dritte Fahrzeugsignal SF3) das Ausbleiben einer Lenkbewegung des Fahrzeugs 100 repräsentiert und die Steuereinheit 2 eine Gier-Bewegung des Fahrzeugs 100 ermittelt. Somit wird eine Genauigkeit des Ermittelns eines Unfalls U des Fahrzeugs 100 verbessert.

Vorzugsweise kann das Fahrzeugsignal SF einen Fehler eines Fahrzeugsubsystems 132 repräsentieren. Besonders bevorzugt ist die Steuereinheit 2 dazu ausgebildet, zu ermitteln, dass ein Fehler eines Fahrzeugsubsystems 132 vorliegt und/oder dass ein Fahrzeugsignal SF ausbleibt. Das Ausbleiben des Fahrzeugsignals wird häufig auch als Time Out bezeichnet. Infolge eines Unfalls U des Fahrzeugs 100 werden meist eines oder mehrere Fahrzeugsubsysteme 132 beschädigt, sodass Fahrzeugsignale SF ausbleiben und/oder einen Fehler des beschädigten Fahrzeugsubsystems 132 repräsentieren. Die Steuereinheit 2 kann daher vorzugsweise dazu ausgebildet sein, ein Ausbleiben von einem oder mehreren Fahrzeugsignalen SF als Kriterium zum Ermitteln eines Unfalls U des Fahrzeugs 100 zu verwenden. Vorzugsweise kann ein Fahrzeugsignal SF auch eine Versorgungsspannungssignal SV des Fahrzeugs 100 sein. Bevorzugt ist die Steuereinheit 2 dazu ausgebildet, basierend auf einer Versorgungsspannung des Fahrzeugs 100 zu ermitteln, ob eines oder mehrere Fahrzeugsubsysteme 132 des Fahrzeugs 100 einen Fehler aufweisen.

Ein viertes Fahrzeugsubsystem 132.4 kann ein Raddrehzahlsensor 148 sein, wobei ein viertes Fahrzeugsignal SF4 eine Raddrehzahl zumindest eines Rades 112.1, 112.2, 118.1, 118.2, 118.3, 118.4 des Fahrzeugs 100 repräsentiert. Vorzugsweise ist die Steuereinheit 2 dazu ausgebildet, basierend auf dem vierten Fahrzeugsignal SF4 zu ermitteln, ob die Räder 112.1, 112.2, 118.1, 118.2, 118.3, 118.4 des Fahrzeugs 100 stillstehen. Besonders bevorzugt ist die Steuereinheit dazu ausgebildet, einen Unfall U des Fahrzeugs 100 zu ermitteln, wenn die ersten Fahrzeugdaten DF1 eine Änderung der Drehlage LD des Fahrzeugs 100 repräsentieren und ein Stillstand der Räder 112.1, 112.2, 118.1, 118.2, 118.3, 118.4 des Fahrzeugs 100 ermittelt wird. Wird eine Änderung der Drehlage LD des Fahrzeugs 100 ermittelt während die Räder 112.1, 112.2, 118.1, 118.2, 118.3, 118.4 des Fahrzeugs 100 stillstehen, weist dies auf einen Unfall U des Fahrzeugs 100 hin, da die Änderung der Drehlage LD des Fahrzeugs 100 nicht durch das Fahrzeug 100 selbst hervorgerufen worden sein kann.

Ferner bevorzugt kann die Steuereinheit 2 dazu ausgebildet sein, die Feststellbremse 124 des Fahrzeugs 100 nur dann in eine Bremsstellung BS zu bringen, wenn die Räder 112.1, 112.2, 118.1, 118.2, 118.3, 118.4 des Fahrzeugs 100 stillstehen. Durch eine derart bevorzugte Ausgestaltung kann sichergestellt werden, dass die Feststellbremse 124 nicht während des Unfalls U eingelegt wird. Hierdurch wird ein aktiver Eingriff des Fahrzeugsicherheitssystems 1 in das Unfallgeschehen verhindert. Wird die Feststellbremse 124 eingelegt, während sich die Räder 112.1, 112.2, 118.1, 118.2, 118.3, 118.4 des Fahrzeugs 100 drehen, können unvorhergesehene Nachteile verursacht werden. Beispielsweise kann ein Bewegungszustand des Fahrzeugs 100 instabil werden oder das Fahrzeug 100 kann sich aufgrund blockierender Räder 112.1, 112.2, 118.1, 118.2, 118.3, 118.4 überschlagen.

Ein fünftes Fahrzeugsubsystem 132.5 ist hier ein Koppelkraftsensor 150. Der Koppelkraftsensor 150 stellt ein fünftes Fahrzeugsignal SF5 bereit, das eine Koppelkraft repräsentiert (nicht dargestellt). Die Koppelkraft liegt vorzugsweise an einer Anhängerkupplung 152, des Fahrzeugs an. Ist das Fahrzeug 100 in einen Unfall U verwickelt, kann das fünfte Fahrzeugsignal SF5 Koppelkräfte an der Anhängerkupplung 152 repräsentieren, die im normalen Fahrbetrieb nicht auftreten. Vorzugsweise kann ein Überschreiten eines Grenzwerts GW durch die Koppelkraft, die durch ein Fahrzeugsignal SF (vorzugsweise das fünfte Fahrzeugsignal SF5) repräsentiert wird, als Kriterium zum Ermitteln eines Unfalls U des Fahrzeugs 100 durch die Steuereinheit 2 verwendet werden. Somit kann durch ein von dem Koppelkraftsensor 150 bereitgestelltes Fahrzeugsignal SF5 das Ermitteln eines Unfalls U des Fahrzeugs 100 verbessert werden. Kippt beispielsweise der Anhänger 300 während des Unfalls U um, treten sehr große Koppelkräfte und/oder Koppelkraftänderungen auf. Weiterhin kann beispielsweise aufgrund von Dämpfungseffekten eine Änderung der Drehlage LD des Fahrzeugs 100 weniger stark ausgeprägt sein, wenn ein weiteres Fahrzeug auf den Anhänger 300 aufprallt. Eine Berücksichtigung eines fünften Fahrzeugsignals SF5, welches die Koppelkraft repräsentiert, kann daher eine Zuverlässigkeit beim Ermitteln solcher Unfälle verbessern. Insbesondere können das die Koppelkraft repräsentierende fünfte Fahrzeugsignal SF5 und das erste Fahrzeugsignal SF1, das ein Motorsignal des Motors 136 repräsentiert, in Kombination zum Ermitteln eines Unfalls U des Fahrzeugs 100 verwendet werden. Repräsentieren beispielsweise die ersten Fahrzeugdaten DF1 eine starke Nickbewegung und das fünfte Fahrzeugsignal SF5 eine Koppelkraft, ohne dass das erste Fahrzeugsignal SF1 ein Motormoment des Motors 136 repräsentieren, weist dies auf einen Unfall U hin. Ein eine Koppelkraft repräsentierendes Fahrzeugsignal SF kann auch als Koppelkraftsignal SKK bezeichnet werden.

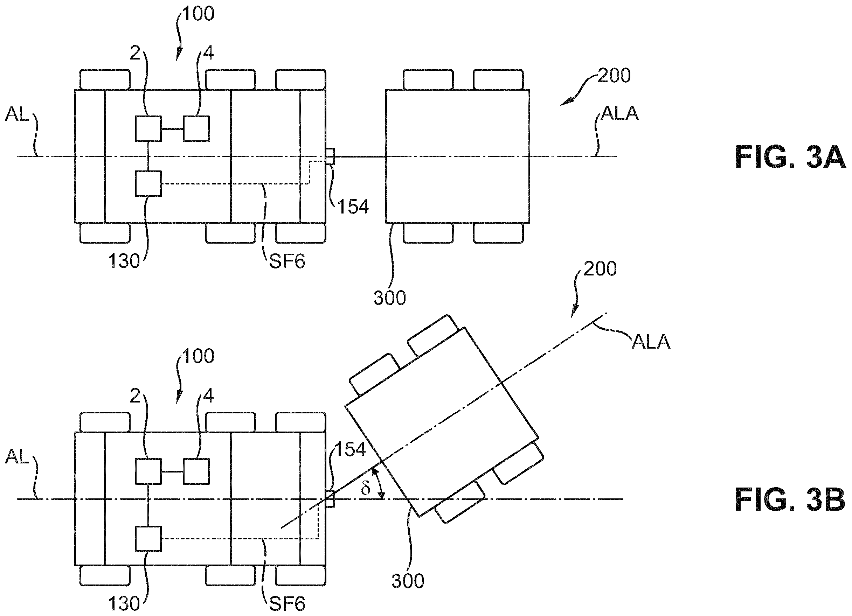

Wie Figur 3 verdeutlicht, kann ein sechstes Fahrzeugsubsystem 132.6 einen Knickwinkelsensor 154 aufweisen, der ein sechstes Fahrzeugsignal SF6 bereitstellt. Das sechste Fahrzeugsubsystem 132.6 kann daher auch als Knickwinkelsystem bezeichnet werden. Das sechste Fahrzeugsignal SF6 repräsentiert vorzugsweise einen zwischen der Längsachse AL des Fahrzeugs 100 und einer Längsachse ALA des Anhängers 300 gebildeten Knickwinkel δ. Die Steuereinheit 2 ist dazu ausgebildet, unter Berücksichtigung des Knickwinkels δ zu ermitteln, ob das Fahrzeug 100 in einen Unfall U verwickelt ist. Besonders bevorzugt erfolgt das Ermitteln eines Unfalls U unter Berücksichtigung einer Änderungsrate des Knickwinkels δ. Beispielsweise kann ein Seitenaufprall des Fahrzeugs 100 und/oder des Anhängers 300 in einer sehr starken Änderung des Knickwinkels δ und/oder sehr großen Änderungsraten, über eine kurze Zeit, des Knickwinkels δ resultieren, welche im unfallfreien Fahrbetrieb nicht auftritt. Ein einen Knickwinkel repräsentierendes Fahrzeugsignal SF kann auch als Knickwinkelsignal SKW bezeichnet werden.

Vorzugsweise weist ein siebtes Fahrzeugsubsystem 132.7 zumindest einen Beschleunigungssensor 155 auf, der ein siebtes Fahrzeugsignal SF7 bereitstellt. Hier ist der Beschleunigungssensor 155 in die zentrale Hauptsteuereinheit 130 integriert. Es kann jedoch auch vorgesehen sein, dass der Beschleunigungssensor 155 separat ausgeführt ist und das siebte Fahrzeugsignal SF7 bereitstellt. Das siebte Fahrzeugsignal repräsentiert bevorzugt eine Längsbeschleunigung und/oder Querbeschleunigung des Fahrzeugs 100. Da Unfälle des Fahrzeugs 100 neben einer Änderung der Drehlage LD auch mit einer Längs- oder Querbeschleunigung des Fahrzeugs 100 einhergehen, kann das siebte Fahrzeugsignal SF7 zum Ermitteln eines Unfalls U des Fahrzeugs 100 verwendet werden. Ferner kann ein achtes Fahrzeugsignal SF8 das Signal eines Umweltsensors 157 sein. Der Umweltsensor 157 ist vorzugsweise als Kamera, Ultraschallsensor, Radar und/oder Lidar-Sensor ausgebildet.

Besonders bevorzugt ist die Steuereinheit 2 dazu ausgebildet, das Ermitteln des Unfalls U basierend auf den Fahrzeugdaten DF1 und zumindest zwei Fahrzeugsignalen SF durchzuführen. Vorzugsweise repräsentiert eines der Fahrzeugsignale SF (vorzugsweise das sechste Fahrzeugsignal SF6) den Knickwinkel δ und ein weiteres Fahrzeugsignal SF (vorzugsweise das vierte Fahrzeugsignal SF4) eine Lenkbewegung des Fahrzeugs 100. Vorzugsweise kann als Kriterium zum Ermitteln eines Unfalls U des Fahrzeugs 100 verwendet werden, wenn das sechste Fahrzeugsignal SF6, das den Knickwinkel δ repräsentiert, einen ersten Grenzwert GW überschreitet und das vierte Fahrzeugsignal SF4, das eine Lenkbewegung des Fahrzeugs 100 repräsentiert, unter einem diesem zugeordneten zweiten Grenzwert GW2 liegt. Somit kann durch das vierte Fahrzeugsignal SF4 und das sechste Fahrzeugsignal SF6 in bevorzugter Weise das Ermitteln eines Unfalls U des Fahrzeugs 100 basierend auf den ersten Fahrzeugdaten DF1 verifiziert werden. Es kann auch vorgesehen sein, dass ein Unfall U des Fahrzeugs 100 durch die Steuereinheit 2 bereits bei geringeren Grenzwerten GW der ersten Fahrzeugdaten DF1 ermittelt wird, wenn das Fahrzeugsignal SF ein Signalkriterium SK erfüllt. Ferner kann vorgesehen sein, dass ein Unfall U des Fahrzeugs 100 nur dann ermittelt wird, wenn zumindest ein Fahrzeugsignal SF ein vordefiniertes Signalkriterium SK erfüllt.

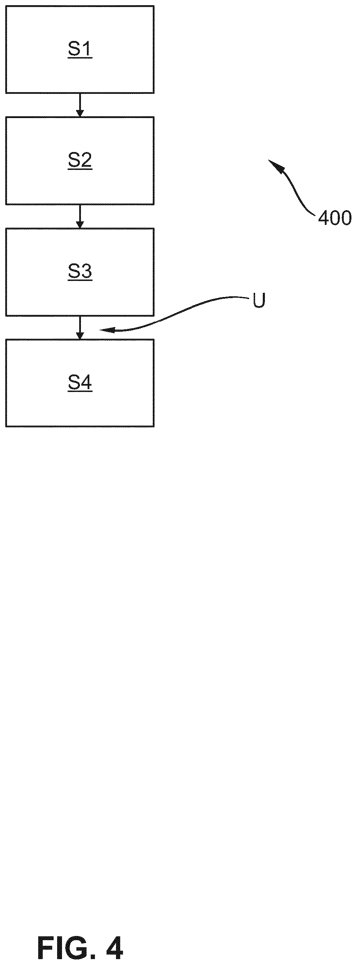

Figur 4 verdeutlicht einen Ablauf einer bevorzugten Ausführungsform des Verfahrens 400 zum Sichern eines Fahrzeugs 100, insbesondere Nutzfahrzeugs 102, mit einem Fahrzeugsicherheitssystem 1 bei einem Unfall U. In einem ersten Schritt S1 werden mittels der Sensoreinheit 4 erste Fahrzeugdaten DF1 erfasst, die dann in einem Schritt S2 an der Steuereinheit 2 bereitgestellt werden. Daraufhin ermittelt die Steuereinheit 2 unter Verwendung der ersten Fahrzeugdaten DF1, ob das Fahrzeug 100 in einen Unfall U verwickelt ist (Schritt S3). Wenn die Steuereinheit 2 einen Unfall U des Fahrzeugs 100 ermittelt, wird die Feststellbremse 24 des Fahrzeugs 100 durch die Steuereinheit 2 in eine Bremsstellung BS verbracht (Schritt S4). Vorzugsweise stellt die Steuereinheit 2 zum Verbringen der Feststellbrems 24 in die Bremsstellung BS das Sicherheit-Feststellbremssignal SSFB an der zentralen Bremssteuereinheit 126 des Bremssystems 104 bereit.

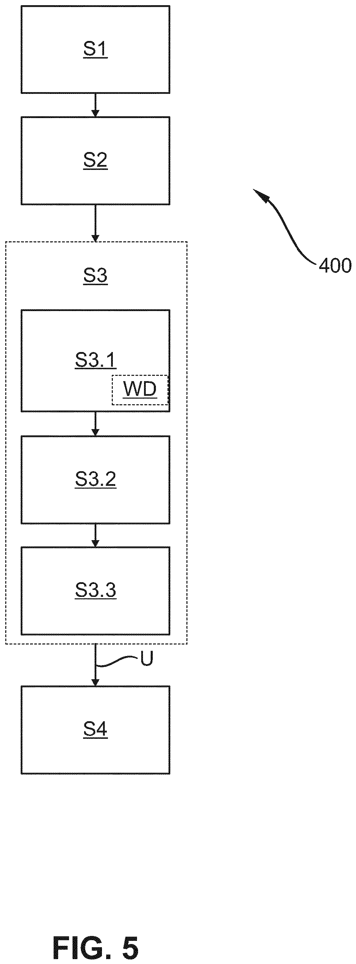

Der Schritt S3 kann vorzugsweise auch Teilschritte S3.1, S3.2, S3.3 aufweisen (Figur 5). In einem ersten Teilschritt S 3.1 ermittelt die Steuereinheit 2 basierend auf den ersten Fahrzeugdaten DF1 einen Wert WD einer Drehbeschleunigung BD des Fahrzeugs 100 um seine Längsachse AL, Querachse AQ und/oder Hochachse AH. In einem zweiten Teilschritt S3.2 wird der ermittelte Wert WD der Drehbeschleunigung BD mit einem vordefinierten Grenzwert GW verglichen. Vorzugsweise ist der vordefinierte Grenzwert GW in dem Speicher 10 der Steuereinheit 2 vorgespeichert. Wenn der Wert WD der Drehbeschleunigung BD den vordefinierten Grenzwert GW überschreitet, bestimmt die Steuereinheit 2, dass das Fahrzeug 100 in einen Unfall U verwickelt ist (Teilschritt S3.3).

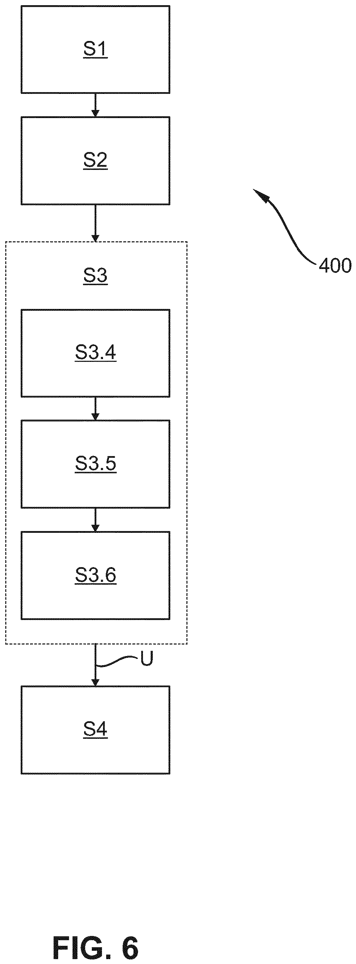

In einer alternativen oder ergänzenden Ausführungsform des Verfahrens 400 umfasst der Schritt S3 die Teilschritte S3.4, S.3.5 und S3.6 (Figur 6). In einem vierten Teilschritt S3.4 ermittelt die Steuereinheit 2 basierend auf den ersten Fahrzeugdaten DF1 eine absolute Lage des Fahrzeugs 100 in Bezug auf ein ortsfestes Inertialsystem. Im fünften Teilschritt S3.5 ermittelt die Steuereinheit 2 daraufhin, ob die ermittelte absolute Lage des Fahrzeugs 100 in einem vordefinierten Soll-Lagebereich des Fahrzeugs 100 ist. Anschließend bestimmt Steuereinheit 2 einen Unfall U des Fahrzeugs 100, wenn die Lage nicht dem Soll-Lagerbereich ist (Teilschritt S3.6). Es kann jedoch auch vorgesehen sein, dass die Steuereinheit 2 einen Unfall U des Fahrzeugs 100 ermittelt, wenn die ermittelte absolute Lage des Fahrzeugs 104 einen vordefinierten Zeitraum, der vorzugsweise in dem Speicher 10 vorgespeichert ist, nicht in dem Soll-Lagebereich ist.

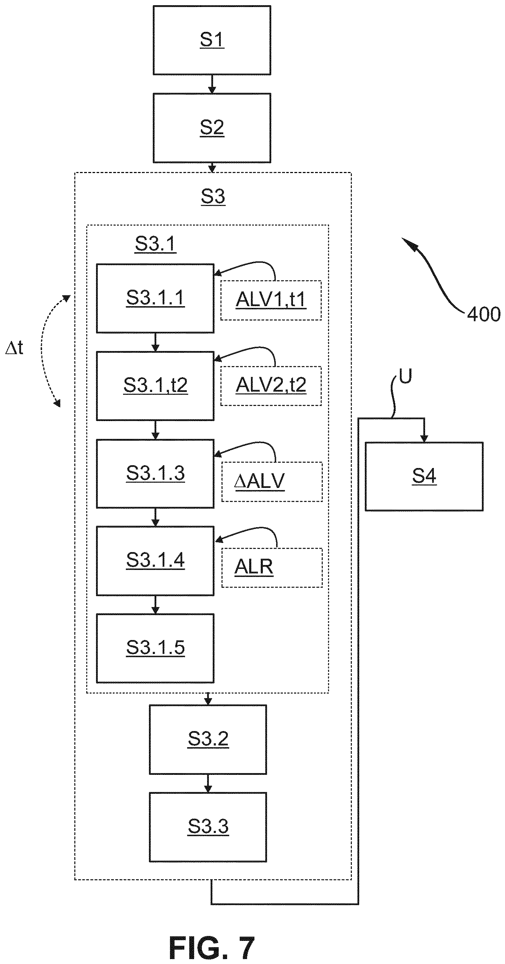

Wieder bezugnehmend auf das erste Ausführungsbeispiel des Verfahrens 400 weist der Teilschritt S3.1 vorzugsweise mehrere Subschritte S3.1.1, S3.1.2, S3.1.3, S3.1.4, S3.1.5 auf (Figur 7). Die Subschritte S3.1.1, S3.1.2, S3.1.3, S3.1.4, S3.1.5 beschreiben das Ermitteln eines Werts WD einer Drehbeschleunigung BD des Fahrzeugs 100 durch die Steuereinheit 2 basierend auf ersten Fahrzeugdaten DF1, die von einem Achslastsensor 8 bereitgestellt werden. Der Achslastsensor (8) ist vorzugsweise ein Achslastsensor (8) der Sensoreinheit (4). Es kann jedoch auch vorgesehen sein, dass die Sensoreinheit (4) zum Empfangen von die Achslastverteilung ALV des Fahrzeugs (100) repräsentierenden Achslastdaten DAL mit einem externen Achslastsensor (8) verbindbar ist. In einem ersten Subschritt S 3.1.1 ermittelt die Steuereinheit 2, basierend auf den von dem Achslastsensor 8 bereitgestellt Fahrzeugdaten DF1, eine erste Achslastverteilung ALV1 des Fahrzeugs 100 zu einem ersten Zeitpunkt t1. In einem zweiten Subschritt S3.1.2 ermittelt die Steuereinheit 2 basierend auf den von dem Achslastsensor 8 bereitgestellten Fahrzeugdaten DF1 eine zweite Achslastverteilung ALV2 des Fahrzeugs 100 in einem zweiten Zeitpunkt t2. In einem dritten Subschritt S3.1.3 ermittelt die Steuereinheit 2 aus der ersten Achslastverteilung ALV1 im Zeitpunkt t1 und der zweiten Achslastverteilung ALV2 im Zeitpunkt t2 eine Achslaständerung ΔALV. Nach dem Ermitteln der Achslaständerung ΔALV (S3.1.3) ermittelt die Steuereinheit 2 das zwischen dem ersten Zeitpunkt t1 und dem zweiten Zeitpunkt t2 verstrichene Zeitintervall Δt und basierend auf der Achslaständerung ΔALV und dem Zeitintervall Δt eine Achslaständerungsrate ALR (Subschritt S3.1.4). In einen fünften Subschritt S3.1.5 ermittelt die Steuereinheit 2 dann eine Drehbeschleunigung BD des Fahrzeugs 100 basierend auf der Achslaständerungsrate ALR. Bevorzugt erfolgt das ermitteln der Drehbeschleunigung BD des Fahrzeugs 100 ferner unter Verwendung von in dem Speicher 10 vorgespeicherten zweiten Fahrzeugdaten DF2. Beispielsweise können die zweiten Fahrzeugdaten DF2 ein Signalverlauf des Achslastsensors 8 sein, welcher in dem Speicher 10 gespeichert ist. Ferner können die zweiten Fahrzeugdaten DF2 auch Informationen zum Fahrzeug 100, wie beispielsweise eine Fahrzeugmasse, ein Radstand oder Fahrzeugdimensionen sein. Es soll verstanden werden, dass das Ermitteln eines Werts einer Drehbeschleunigung BD des Fahrzeugs 100 durch die Steuereinheit 2 auch basierend auf ersten Fahrzeugdaten DF1 erfolgen kann, die von einem Drehratensensor 6 bereitgestellt werden.

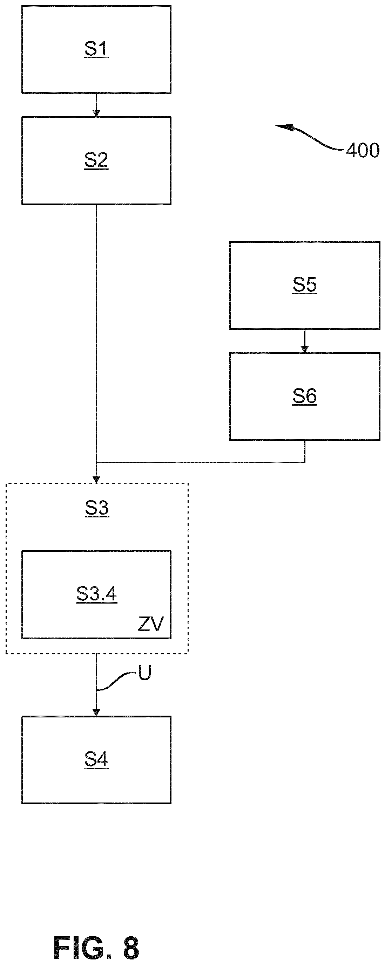

Gemäß dem in Figur 8 dargestellten dritten Ausführungsbeispiel des Verfahrens 400, das eine Weiterbildung des ersten oder zweiten Ausführungsbeispiels des Verfahrens 400 ist, kann das Verfahren weitere Schritte S5, S6 aufweisen, die vor dem Ermitteln eines Unfalls U des Fahrzeugs 100 durch die Steuereinheit 2 durchgeführt werden. In einem fünften Schritt S5, der vorzugsweise parallel zu den Schritten S1 und/oder S2 durchgeführt wird, wird zumindest ein Fahrzeugsignal SF eines Fahrzeugsubsystems 132 bereitgestellt. In einem sechsten Schritt S6 vergleicht die Steuereinheit 2 das Fahrzeugsignal SF mit einem vorbestimmten Signalkriterium SK. Das vorbestimmte Signalkriterium SK ist dabei vorzugsweise in dem Speicher 10 vorgespeichert. In diesem Ausführungsbeispiel umfasst der Schritt Ermitteln eines Unfalls U des Fahrzeugs durch die Steuereinheit 2 unter Verwendung der Fahrzeugdaten DF1 den Teilschritt S3.4. In Teilschritt S3.4 ermittelt die Steuereinheit 2 einen Unfall U des Fahrzeugs 100 sowohl basierend auf den Fahrzeugdaten DF1 als auch basierend auf dem Vergleich des Fahrzeugsignals SF1 mit dem Signalkriterium SK. Vorzugsweise kann der Teilschritt S3.4 auch ein Ermitteln des Unfalls U des Fahrzeugs 100 basierend auf den Fahrzeugdaten DF1 und einem Vergleich des Zeitverlaufs des Fahrzeugsignals SF mit einem vorbestimmten Signalkriterium SK aufweisen. Es soll verstanden werden, dass der Schritt S3 weiterhin auch die Teilschritte S3.1 und S3.2 aufweisen kann.

Gemäß einem vierten Ausführungsbeispiel, weist das Verfahren ferner die Schritte S7 und S8 auf. Im siebten Schritt S7 wird von dem Fahrzeugsicherheitssystem 1 ein Notruf N ausgelöst, wenn ein Unfall U des Fahrzeugs 100 ermittelt wird. Der achte Schritt S8 weist die Freigabeschritte S8.1, S8.2 und S8.3 auf. Im ersten Freigabeschritt S 8.1 wird das Fahrpedal 132 des Fahrzeugs 100 betätigt. In Antwort auf das Betätigen des Fahrpedals (S 8.1) wird ein Fahrsignal SD bereitgestellt. In einem dritten Freigabeschritt S8.3 löst die Steuereinheit 2 die Feststellbrems 24. Vorzugsweise stellt die Steuereinheit 2 zum Lösen der Feststellbrems 24 ein Lösesignal SL an der zentralen Bremssteuereinheit 126 bereit. Es soll verstanden werden, dass die Schritte S7 und S8 voneinander unabhängig durchgeführt werden können. Ferner kann vorzugsweise auch das Verfahren gemäß dem dritten Ausführungsbeispiel die Schritte S7 und S8 aufweisen.

Vorzugsweise ist die Steuereinheit 2 eine Hauptsteuereinheit 130, eine Bremssteuereinheit 126 und/oder eine andere Steuereinheit des Fahrzeugs 100. Ferner kann die Steuereinheit 2 vorzugsweise auch eine Anhängersteuereinheit und/oder Anhängerbremssteuereinheit sein. Bevorzugt können auch Anhängersignale eines Anhängers 300 zum Ermitteln eines Unfalls U des Fahrzeugs 100 verwendet werden, die besonders bevorzugt mittels einer Anhängersteuereinheit bereitgestellt werden. Ferner kann auch der Anhänger 300 eine Notlöseeinrichtung 134 aufweisen. Von Sensoren des Anhängers 300 bereitgestellte Fahrzeugsignale können zum Plausibilisieren oder an Stelle der Fahrzeugdaten verwendet werden. Besonders, wenn bspw. das Zugfahrzeug komplett zerstört wird kann der Anhänger 300 so als Redundanz dienen und dort die Bremse einlegen.

### Bezugszeichenliste (Teil der Beschreibung)

- 1: Fahrzeugsicherheitssystem
- 2: Steuereinheit
- 4: Sensoreinheit
- 6: Drehratensensor
- 8, 8.1, 8.2, 8.3, 8.4, 8.5, 8.6: Achslastsensor
- 10: Speicher
- 11: Notrufsystem
- 100: Fahrzeug
- 102: Nutzfahrzeug
- 104: Bremssystem
- 106: Elektronisch steuerbares pneumatisches Bremssystem
- 108: Vorderachsbremskreis
- 110: Hinterachsbremskreis
- 112.1, 112.2: Vorderräder
- 114, 114.1, 114.2: Vorderachsbetriebsbremszylinder
- 116: Vorderachsmodulator
- 118.1, 118.2, 118.3, 118.4: Hinterräder
- 120: Hinterachsmodulator
- 122, 122.1, 122.2, 122.3, 122.4: Hinterachsbetriebsbremszylinder
- 123: Betriebsbremse
- 124.1, 124.2, 124.3, 124.4: Feststellbremszylinder
- 124: Feststellbremse
- 126: Zentrale Bremssteuereinheit
- 128: Bremswertgeber
- 130: Hauptsteuereinheit
- 131: Fahrzeugdach
- 132, 132.1, 132.2, 132.3, 132.4,: Fahrzeugsubsysteme
- 132.5, 132.6, 132.7 133: Fahrpedal
- 134: Notlöseeinrichtung
- 136: Motor
- 137: Motorsteuergerät
- 138: Motorsensor
- 139: Fahrzeugdatenbus
- 140: Kühler
- 141: Öldrucksensor
- 142: Kühlmittelsensor
- 143: Kühlwassersensor
- 144: Fahrzeugfront
- 146, 146.1, 146.2: Lenksensor
- 148: Raddrehzahlsensor
- 150: Koppelkraftsensor
- 152: Anhängerkupplung
- 154: Knickwinkelsensor
- 155: Beschleunigungssensor
- 157: Umweltsensor
- 200: Untergrund
- 300: Anhänger
- 400: Verfahren
- AH: Hochachse des Fahrzeugs
- AH1: Hochachse in Ausgangsposition
- AH2: Hochachse in Endposition
- AL: Längsachse des Fahrzeugs
- AQ: Querachse des Fahrzeugs
- AQ1: Querachse in Ausgangsposition
- AQ2: Querachse in Endposition
- ALR: Achslaständerungsrate
- ALV1: Erste Achslastverteilung
- ALV2: Zweite Achslastverteilung
- ΔALV: Achslaständerung
- BS: Bremsstellung
- BD: Drehbeschleunigung
- DAL: Achslastdaten
- DF1: Erste Fahrzeugdaten
- DF2: Zweite Fahrzeugdaten
- FS: Fahrstellung
- GW: Grenzwert
- GW2: Zweiter Grenzwert
- HA1, HA2: Hinterachsen des Fahrzeugs
- LD: Drehlage
- N: Notruf
- SP: Schwerpunkt
- SP1: Schwerpunkt des Fahrzeugs in Ausgangsposition
- SP2: Schwerpunkt des Fahrzeugs in Endposition
- SB: Bremsvorgabe
- SBF: Feststellbremssignal
- SBH: Hinterachsbremssignal
- SBV: Vorderachsbremssignal
- SF, SF1, SF2, SF3, SF4, SF5, SF6,: Fahrzeugsignal
- SF7, SF8 SK: Signalkriterium
- SKK: Koppelkraftsignal
- SKM: Kühlmittelsignal
- SKW: Knickwinkelsignal
- SNL: Notlösesignal
- SOP: Öldrucksignal
- SSFB: Sicherheits-Feststellbremssignal
- SV: Versorgungsspannungssignal
- t1: Erster Zeitpunkt
- t2: Zweiter Zeitpunkt
- Δt: Zeitintervall
- U: Unfall
- VA: Vorderachse des Fahrzeugs
- WD: Wert der Drehbeschleunigung
- ZV: Zeitverlauf
- α: Gierwinkel
- β: Nickwinkel
- γ: Rollwinkel
- δ: Knickwinkel

## Patentansprüche

1. Fahrzeugsicherheitssystem (1) für ein Fahrzeug (100), insbesondere Nutzfahrzeug (102), mit einem Bremssystem (104), das eine Feststellbremse (124) umfasst, wobei die Feststellbremse (124) zwischen einer Fahrstellung (FS) und einer Bremsstellung (BS) schaltbar ist,
wobei das Fahrzeugsicherheitssystem (1) zum Sichern des Fahrzeugs (100) nach einem Unfall ausgebildet ist und
eine Steuereinheit (2) aufweist, die zum Ermitteln eines Unfalls (U) des Fahrzeugs (100) und zum Schalten der Feststellbremse (124) des Fahrzeugs (100) in die Bremsstellung (BS) ausgebildet ist, wenn ein Unfall (U) des Fahrzeugs (100) ermittelt wird,
**gekennzeichnet durch** eine Sensoreinheit (4) zum Erfassen und Bereitstellen von ersten Fahrzeugdaten (DF1), die eine Drehlage (LD) des Fahrzeugs (100) repräsentieren,
wobei die Steuereinheit (2) dazu ausgebildet ist, das Ermitteln des Unfalls (U) basierend auf den ersten Fahrzeugdaten (DF1) durchzuführen.

2. Fahrzeugsicherheitssystem (1) nach Anspruch 1, wobei die Sensoreinheit (4) einen Drehratensensor (6) aufweist, der zum Ermitteln einer Änderung der Drehlage (LD) des Fahrzeugs (100) um eine Hochachse (AH), Querachse (AQ) und/oder Längsachse (AL) des Fahrzeugs (100) ausgebildet ist.

3. Fahrzeugsicherheitssystem (1) nach Anspruch 1 oder 2, wobei die Sensoreinheit (4) einen Achslastsensor (8) aufweist, der zum Ermitteln einer Achslast von Achsen (VA, HA1, HA2) des Fahrzeugs (100) ausgebildet ist.

4. Fahrzeugsicherheitssystem (1) nach einem der vorstehenden Ansprüche, wobei die Steuereinheit (2) dazu angepasst ist, das Ermitteln eines Unfalls (U) unter Berücksichtigung eines Zeitverlaufs (ZV) der Fahrzeugdaten (DF1) durchzuführen.

5. Fahrzeugsicherheitssystem (1) nach einem der vorstehenden Ansprüche, wobei die Steuereinheit (2) dazu ausgebildet ist, in Antwort auf das Ermitteln eines Unfalls (U) zusätzlich zur Feststellbremse (124) des Fahrzeugs (100) auch eine Betriebsbremse (123) des Fahrzeugs (100) in eine Bremsstellung (BS) zu schalten.

6. Fahrzeugsicherheitssystem (1) nach einem der vorstehenden Ansprüche, wobei die Steuereinheit (2) dazu ausgebildet ist, das Ermitteln des Unfalls (U) basierend auf den Fahrzeugdaten (DF1) und mindestens einem Fahrzeugsignal (SF) durchzuführen, das von einem Fahrzeugsubsystem (132) des Fahrzeugs (100), vorzugsweise einem Raddrehzahlsensor (148), einem Motorsteuergerät (137), einer zentralen Hauptsteuereinheit (130), einem Öldrucksensor (141), einem Kühlmittelsensor (142), einem Koppelkraftsensor (150), einem oder mehreren Beschleunigungssensoren (155), einem oder mehreren Umweltsensoren (157), und/oder einem Knickwinkelsensor (154), bereitgestellt wird.

7. Fahrzeugsicherheitssystem (1) nach Anspruch 6, wobei die Steuereinheit (2) dazu ausgebildet ist, zu bestimmen, ob das Fahrzeugsignal (SF) ein vordefiniertes Signalkriterium (SK) erfüllt und einen Unfall (U) des Fahrzeugs (100) nur dann zu ermitteln, wenn das Fahrzeugsignal (SF) das Signalkriterium (SK) erfüllt.

8. Fahrzeugsicherheitssystem (1) nach einem der Ansprüche 7 oder 9, wobei das Fahrzeugsignal (SF) ein Lenksignal (SF3), ein Versorgungsspannungssignal (SV) des Fahrzeugs (100), ein Raddrehzahlsignal (SF4), ein Motorsignal (SF1), ein Öldrucksignal (SOP), ein Kühlmittelsignal (SK), ein Koppelkraftsignal (SKK) und/oder ein Knickwinkelsignal (SKW) ist.

9. Fahrzeugsicherheitssystem (1) nach einem der vorstehenden Ansprüche, wobei die Steuereinheit (2) dazu ausgebildet ist, in Antwort auf ein Fahrsignal (SD), das von einem Fahrpedal (133) des Fahrzeugs (100) bereitgestellt wird, und/oder in Antwort auf ein Notlösesignal (SNL), das von einer Notlöseeinrichtung (134) bereitgestellt wird, die Feststellbremse (124) des Fahrzeugs (100) in eine Fahrstellung (FS) zu bringen.

10. Fahrzeugsicherheitssystem (1) nach einem der vorstehenden Ansprüche, ferner aufweisend, ein Notrufsystem (11), das dazu ausgebildet ist, in Antwort auf das Ermitteln eines Unfalls (U) des Fahrzeugs (100) einen Notruf (N) auszulösen.

11. Fahrzeugsicherheitssystem (1) nach Anspruch 10, wobei der Notruf (N) getätigt wird und fahrzeugspezifische Informationen und/oder Information über eine Ladung des Fahrzeugs (100) aufweist, die vorzugsweise in einem Speicher 10 des Fahrzeugsicherheitssystems (1) vorgespeichert sind.

12. Fahrzeugsicherheitssystem (1) nach einem der vorstehenden Ansprüche, wobei die Steuereinheit (2) dazu ausgebildet ist, das Ermitteln des Unfalls (U) unabhängig von einem Notbremssignal und/oder einem Airbag-Signal des Fahrzeugs (100) durchzuführen.

13. Verfahren (400) zum Sichern eines Fahrzeugs (100), insbesondere Nutzfahrzeugs (102), mit einem Fahrzeugsicherheitssystem (1) bei einem Unfall (U), aufweisend die Schritte:
- Erfassen von Fahrzeugdaten (DF1) mittels einer Sensoreinheit (4),
- Bereitstellen der Fahrzeugdaten (DF1) an einer Steuereinheit (2),
- Ermitteln eines Unfalls des Fahrzeugs (100) durch die Steuereinheit (2) unter Verwendung der Fahrzeugdaten (DF1), und
- Verbringen einer Feststellbremse (124) des Fahrzeugs (100) in eine Bremsstellung (BS) durch die Steuereinheit (2), wenn die Steuereinheit (2) einen Unfall (U?) des Fahrzeugs (100) ermittelt
**dadurch gekennzeichnet, dass** die Fahrzeugdaten (DF1) eine Drehlage (LD) des Fahrzeugs (100) repräsentieren.

14. Verfahren (400) nach Anspruch 13, wobei der Schritt Ermitteln eines Unfalls (U) des Fahrzeugs (100) durch die Steuereinheit (2) unter Verwendung der Fahrzeugdaten (DF1) aufweist:
- Ermitteln eines Werts (WD) einer Drehbeschleunigung (BD) des Fahrzeugs (100) um eine Hochachse (AH), Querachse (AQ) und/oder eine Längsachse (AL) durch die Steuereinheit (2) basierend auf den ersten Fahrzeugdaten (DF1),
- Vergleichen der ermittelten Drehbeschleunigung (BD) mit einem vordefinierten Grenzwert (GW), und
- Bestimmen eines Unfalls (U) des Fahrzeugs (100), wenn der Wert (WB) der Drehbeschleunigung (BD) den vordefinierten Grenzwert (GW) überschreitet.

15. Verfahren (400) nach einem der Ansprüche 13 oder 14, wobei die Sensoreinheit (4) einen Drehratensensor (6) aufweist.

16. Verfahren (400) nach einer der Ansprüche 13 bis 15, wobei die Sensoreinheit (4) einen Achslastsensor (8) aufweist und/oder mit einem Achslastsensor (8) des Fahrzeugs (100) verbindbar ist.

17. Verfahren (400) nach Anspruch 14 und 16, wobei der Schritt Ermitteln eines Werts (WB) einer Drehbeschleunigung (BD) des Fahrzeugs (100) durch die Steuereinheit (2) basierend auf den ersten Fahrzeugdaten (DF1) aufweist:
- Ermitteln einer ersten Achslastverteilung (ALV1) des Fahrzeugs (100) zu einem ersten Zeitpunkt (t1),
- Ermitteln einer zweiten Achslastverteilung (ALV2) des Fahrzeugs (100) zu einem zweiten Zeitpunkt (t2),
- Ermitteln einer Achslaständerung (ΔALV) aus der Differenz der ersten Achslastverteilung (ALV1) und der zweiten Achslastverteilung (ALV2),
- Ermitteln einer Achslaständerungsrate (ALR) basierend auf der Achslaständerung (ΔALV) und einem von dem ersten Zeitpunkt (t1) bis zu dem zweiten Zeitpunkt (t2) verstrichenen Zeitintervall (Δt), und
- Ermitteln einer Drehbeschleunigung (BD) um eine Hochachse (AH), Querachse (AQ) und/oder Längsachse (AL) des Fahrzeugs (100) basierend auf der Achslaständerungsrate (ALR).

18. Verfahren (400) nach einem der Ansprüche 13 bis 17, ferner aufweisend:
- Bereitstellen eines Fahrzeugsignals (SF) eines Fahrzeugsubsystems (132), vorzugsweise eines Raddrehzahlsensors (148), eines Motorsteuergeräts (137), einer Hauptsteuereinheit (130) des Fahrzeugs (100), eines Öldrucksensors (141), eines Kühlmittelsensors (142), eines Koppelkraftsensors (150), eines oder mehrerer Beschleunigungssensoren (155), eines oder mehreren Umweltsensoren (157) und/oder eines Knickwinkelsensors (154),
- Vergleichen des Fahrzeugsignals (SF) und/oder eines Zeitverlaufs des Fahrzeugsignals (SF) mit einem vorbestimmten Signalkriterium (SK) durch die Steuereinheit (2),
wobei der Schritt Ermitteln eines Unfalls (U) des Fahrzeugs (100) durch die Steuereinheit (2) unter Verwendung der Fahrzeugdaten (DF1) aufweist:
- Ermittelns eines Unfalls (U) des Fahrzeugs (100) basierend auf den Fahrzeugdaten (DF1) und dem Vergleich des Fahrzeugsignals (SF) und/oder des Zeitverlaufs des Fahrzeugsignals (SF) mit dem vorbestimmten Signalkriterium (SK).

19. Verfahren (400) nach Anspruch 18, wobei
das Schalten der Feststellbremse (124) in die Bremsstellung (BS) durch die Steuereinheit (2) nur erfolgt, wenn das Fahrzeugsignal (SF) und/oder der Zeitverlauf des Fahrzeugsignals (SF) das vorbestimmte Signalkriterium (SK) erfüllt.

20. Verfahren (400) nach einem der Ansprüche 13 bis 17 ferner aufweisend:
- Betätigen eines Fahrpedals (133) oder einer Notlöseeinrichtung (134) des Fahrzeugs (100),
- Bereitstellen eines Fahrsignals (SD) durch das Fahrpedal (133) oder die Notlöseeinrichtung (134) in Antwort auf das Betätigen, und
- Lösen der Feststellbremse (124) durch die Steuereinheit (2), wenn ein Fahrsignal (SD) bereitgestellt wird.

21. Verfahren (400) nach einem der Ansprüche 13 bis 20, ferner aufweisend:
- Auslösen eines Notrufs (N), wenn ein Unfall (U) des Fahrzeugs (100) ermittelt wird.

22. Fahrzeug (100), insbesondere Nutzfahrzeug (102), aufweisend ein Fahrzeugsicherheitssystem (1) gemäß einem der vorstehenden Ansprüche 1 bis 12, das zum Ausführen eines Verfahrens (400) gemäß einem der vorstehenden Ansprüche 13 bis 21 ausgebildet ist.

## Claims

1. A vehicle security system (1) for a vehicle (100), in particular a commercial vehicle (102), having a brake system (104), comprising a parking brake (124), wherein the parking brake (124) can be switched between a driving position (FS) and a braking position (BS),
wherein the vehicle security system (1) is configured to secure the vehicle (100) after an accident, and
comprises a control unit (2), which is configured to determine an accident (U) of the vehicle (100) and to switch the parking brake (124) of the vehicle (100) into the braking position (BS) when an accident (U) of the vehicle (100) has been ascertained,
**characterized by** a sensor unit (4) for collecting and providing first vehicle data (DF1), which represent a rotary location (LD) of the vehicle (100),
wherein the control unit (2) is configured to carry out the ascertaining of the accident (U) based on the first vehicle data (DF1).

2. The vehicle security system (1) according to claim 1, wherein the sensor unit (4) comprises a rotation rate sensor (6), which is configured to ascertain a change of the rotary location (LD) of the vehicle (100) about a vertical axis axle (AH), transverse axis (AQ) and/or longitudinal axis (AL) of the vehicle (100).

3. The vehicle security system (1) according to claim 1 or 2, wherein the sensor unit (4) comprises an axle load sensor (8) which is configured to ascertain an axle load of axles (VA, HA1, HA2) of the vehicle (100).

4. The vehicle security system (1) according to any of the foregoing claims, wherein the control unit (2) is adapted to carry out the ascertaining of an accident (U) considering a temporal progression (ZV) of the vehicle data (DF1).

5. The vehicle security system (1) according to any of the foregoing claims, wherein in response to the ascertainment of an accident (U), the control unit (2) is configured to switch a service brake (123) of the vehicle (100) to a braking position (BS) in addition to the parking brake (124) of the vehicle (100).

6. The vehicle security system (1) according to any of the foregoing claims, wherein the control unit (2) is configured to carry out the ascertaining of the accident (U) based on the vehicle data (DF1) and at least one vehicle signal (SF), which is provided by a vehicle sub-system (132) of the vehicle (100), preferably a wheel rotational speed sensor(148), an engine control device (137), a central main control unit (130), an oil pressure sensor (141), a coolant sensor (142), a coupling force sensor (150), one or more acceleration sensors (155), one or more environmental sensors (157), and/or an articulation angle sensor (154).

7. The vehicle security system (1) according to claim 6, wherein the control unit (2) is configured to determine whether the vehicle signal (SF) meets a predefined signal criterion (SK) and to ascertain an accident (U) of the vehicle (100) only when the vehicle signal (SF) meets the signal criterion (SK).

8. The vehicle security system (1) according to any of claims 7 or 9, wherein the vehicle signal (SF) is a steering signal (SF3), a supply voltage signal (SV) of the vehicle (100), a wheel rotational speed signal (SF4), an engine signal (SF1), an oil pressure signal (SOP), a coolant signal (SK), a coupling force signal (SKK), and/or an articulation angle signal (SKW).

9. The vehicle security system (1) according to any of the foregoing claims, wherein in response to a driving signal (SD), which is provided by an accelerator pedal (133) of the vehicle (100), and/or in response to an emergency triggering signal (SNL), which is provided by an emergency triggering device (134), the control unit (2) is configured to bring the parking brake (124) of the vehicle (100) into a driving position (FS) .

10. The vehicle security system (1) according to any of the foregoing claims, further comprising an emergency call system (11) which is configured to trigger an emergency call (N) in response to the ascertainment of an accident (U) of the vehicle (100).

11. The vehicle security system (1) according to claim 10, wherein the emergency call (N) is made and comprises vehiclespecific information and/or information about a load of the vehicle (100), which is preferably previously stored in a memory 10 of the vehicle security system (1).

12. The vehicle security system (1) according to any of the foregoing claims, wherein the control unit (2) is configured to carry out the ascertaining of the accident (U) independently from an emergency braking signal and/or an airbag signal of the vehicle (100).

13. A method (400) for securing a vehicle (100), in particular a commercial vehicle (102), having a vehicle security system (1) in the event of an accident (U), comprising the steps:
- collecting vehicle data (DF1) by means of a sensor unit (4),
- providing the vehicle data (DF1) to a control unit (2),
- ascertaining an accident of the vehicle (100) by the control unit (2) using the vehicle data (DF1), and
- bringing a parking brake (124) of the vehicle (100) to a braking position (BS) by the control unit (2) when the control unit (2) ascertains an accident (U?) of the vehicle (100)
**characterized in that** the vehicle data (DF1) represent a rotary location (LD) of the vehicle (100).

14. The method (400) according to claim 13, wherein the step of ascertaining an accident (U) of the vehicle (100) by the control unit (2) using the vehicle data (DF1) comprises:
- ascertaining a value (WD) of a rotational acceleration (BD ) of the vehicle (100) about a vertical axis (AH), a transverse axis (AQ) and/or a longitudinal axis (AL) by a control unit (2) based on the first vehicle data (DF1), - comparing the ascertained rotational acceleration (BD) with a predefined limit value (GW), and
- ascertaining an accident (U) of the vehicle (100) when the value (WB) of the rotational acceleration (BD) exceeds the predefined limit value (GW).

15. The method (400) according to any of claims 13 or 14, wherein the sensor unit (4) comprises a rotation rate sensor (6) .

16. The method (400) according to any of claims 13 to 15, wherein the sensor unit (4) comprises an axle load sensor (8) and/or can be connected to an axle load sensor (8) of the vehicle (100) .

17. The method (400) according to claim 14 and 16, wherein the step of ascertaining a value (WB) of a rotational acceleration (BD) of the vehicle (100) by the control unit (2) based on the first vehicle data (DF1) comprises:
- ascertaining a first axle load distribution (ALV1) of the vehicle (100) at a first time (t1),
- ascertaining a second axle load distribution (ALV2) of the vehicle (100) at a second time (t2),
- ascertaining an axle load change (ΔALV) from the difference of the first axle load distribution (ALV1) and the second axle load distribution (ALV2),
- ascertaining an axle load change rate (ALR) based on the axle load change (ΔALV) and a time interval (Δt) that has elapsed from the first time (t1) to the second time (t2), and
- ascertaining a rotational acceleration (BD) about a vertical axis (AH), transverse axis (AQ) and/or longitudinal axis (AL) of the vehicle (100) based on the axle load change rate (ALR).

18. The method (400) according to any of claims 13 to 17, further comprising:
- providing a vehicle signal (SF) of a vehicle sub-system (132), preferably a wheel rotational speed sensor (148), an engine control device (137), a main control unit (130) of the vehicle (100), an oil pressure sensor (141), a coolant sensor (142), a coupling force sensor (150), one or more acceleration sensors (155), one or more environmental sensors (157) and/or an articulation angle sensor (154),
- comparing the vehicle signal (SF) and/or a temporal progression of the vehicle signal (SF) with a pre-determined signal criterion (SK) by the control unit (2),
wherein the step of ascertaining an accident (U) of the vehicle (100) by the control unit (2) using the vehicle data (DF1) comprises:
- ascertaining an accident (U) of the vehicle (100) based on the vehicle data (DF1) and the comparison of the vehicle signal (SF) and/or of the temporal progression of the vehicle signal (SF) with the pre-determined signal criterion (SK).

19. The method (400) according to claim 18, wherein
the switching of the parking brake (124) to the braking position (BS) by the control unit (2) only occurs when the vehicle signal (SF) and/or the temporal progression of the vehicle signal (SF) meets the pre-determined signal criterion (SK) .

20. The method (400) according to any of claims 13 to 17, further comprising:
- actuating an accelerator pedal (133) or an emergency triggering device (134) of the vehicle (100),
- providing a vehicle signal (SD) by the accelerator pedal (133) or the emergency triggering device (134) in response to the actuation, and
- releasing the parking brake (124) by the control unit (2) when a driving signal (SD) is provided.

21. The method (400) according to any of claims 13 to 20, further comprising:
- triggering an emergency call (N) when an accident (U) of the vehicle (100) is ascertained.

22. A vehicle (100), in particular a commercial vehicle (102), comprising a vehicle security system (1) according to any of the foregoing claims 1 to 12, which is configured to carry out a method (400) according to any of the foregoing claims 13 to 21.

## Revendications

1. Système de sécurité de véhicule (1) pour un véhicule (100), en particulier véhicule utilitaire (102), avec un système de freinage (104), qui comprend un frein de stationnement (124), dans lequel le frein de stationnement (124) peut être commuté entre une position de conduite (FS) et une position de freinage (BS),
dans lequel le système de sécurité de véhicule (1) est réalisé pour sécuriser le véhicule (100) après un accident et
présente une unité de commande (2), qui est réalisée pour identifier un accident (U) du véhicule (100) et pour commuter le frein de stationnement (124) du véhicule (100) dans la position de freinage (BS), lorsqu'un accident (U) du véhicule (100) est identifié,
**caractérisé par** une unité capteur (4) pour acquérir et pour fournir des premières données de véhicule (DF1), qui représentent une position de rotation (LD) du véhicule (100),
dans lequel l'unité de commande (2) est réalisée pour mettre en œuvre l'identification de l'accident (U) sur la base des premières données de véhicule (DF1).

2. Système de sécurité de véhicule (1) selon la revendication 1, dans lequel l'unité capteur (4) présente un capteur de vitesse de rotation (6), qui est réalisé pour identifier une modification de la position de rotation (LD) du véhicule (100) autour d'un axe vertical (AH), axe transversal (AQ) et/ou axe longitudinal (AL) du véhicule (100).

3. Système de sécurité de véhicule (1) selon la revendication 1 ou 2, dans lequel l'unité capteur (4) présente un capteur de charge par essieu (8), qui est réalisé pour identifier une charge par essieu d'essieux (VA, HA1, HA2) du véhicule (100).

4. Système de sécurité de véhicule (1) selon l'une quelconque des revendications précédentes, dans lequel l'unité de commande (2) est adaptée à mettre en œuvre l'identification d'un accident (U) avec prise en compte d'une variation dans le temps (ZV) des données de véhicule (DF1).

5. Système de sécurité de véhicule (1) selon l'une quelconque des revendications précédentes, dans lequel l'unité de commande (2) est réalisée pour, en réponse à l'identification d'un accident (U), commuter en plus du frein de stationnement (124) du véhicule (100) également un frein de service (123) du véhicule (100) dans une position de freinage (BS).

6. Système de sécurité de véhicule (1) selon l'une quelconque des revendications précédentes, dans lequel l'unité de commande (2) est réalisée pour mettre en œuvre l'identification de l'accident (U) sur la base des données de véhicule (DF1) et d'au moins un signal de véhicule (SF), qui est fourni par un sous-système de véhicule (132) du véhicule (100), de préférence un capteur de vitesse de roue (148), un appareil de commande de moteur (137), une unité de commande principale centrale (130), un capteur de pression d'huile (141), un capteur de liquide de refroidissement (142), un capteur de force d'accouplement (150), un ou plusieurs capteurs d'accélération (155), un ou plusieurs capteurs d'environnement (157), et/ou un capteur d'angle d'articulation (154).

7. Système de sécurité de véhicule (1) selon la revendication 6, dans lequel l'unité de commande (2) est réalisée pour déterminer si le signal de véhicule (SF) remplit un critère de signal (SK) prédéfini et n'identifie un accident (U) du véhicule (100) que lorsque le signal de véhicule (SF) remplit le critère de signal (SK).

8. Système de sécurité de véhicule (1) selon l'une quelconque des revendications 7 ou 9, dans lequel le signal de véhicule (SF) est un signal de direction (SF3), un signal de tension d'alimentation (SV) du véhicule (100), un signal de vitesse de roue (SF4), un signal de moteur (SF1), un signal de pression d'huile (SOP), un signal de liquide de refroidissement (SK), un signal de force d'accouplement (SKK) et/ou un signal d'angle d'articulation (SKW).

9. Système de sécurité de véhicule (1) selon l'une quelconque des revendications précédentes, dans lequel l'unité de commande (2) est réalisée pour, en réponse à un signal de conduite (SD), qui est fourni par une pédale de frein (133) du véhicule (100), et/ou en réponse à un signal de desserrage d'urgence (SNL), qui est fourni par un dispositif de desserrage d'urgence (134), amener le frein de stationnement (124) du véhicule (100) dans une position de conduite (FS).

10. Système de sécurité de véhicule (1) selon l'une quelconque des revendications précédentes, présentant en outre un système d'appel d'urgence (11), qui est réalisé pour déclencher un appel d'urgence (N) en réponse à l'identification d'un accident (U) du véhicule (100).

11. Système de sécurité de véhicule (1) selon la revendication 10, dans lequel l'appel d'urgence (N) est actionné et présente des informations spécifiques au véhicule et/ou une information concernant un chargement du véhicule (100), qui sont mises en mémoire de préférence dans une mémoire 10 du système de sécurité de véhicule (1).

12. Système de sécurité de véhicule (1) selon l'une quelconque des revendications précédentes, dans lequel l'unité de commande (2) est réalisée pour mettre en œuvre l'identification de l'accident (U) indépendamment d'un signal de freinage d'urgence et/ou d'un signal de coussin de sécurité gonflable du véhicule (100).

13. Procédé (400) pour sécuriser un véhicule (100), en particulier véhicule utilitaire (102), avec un système de sécurité de véhicule (1) lors d'un accident (U), présentant les étapes :
- d'acquisition de données de véhicule (DF1) au moyen d'une unité capteur (4),
- de fourniture des données de véhicule (DF1) à une unité de commande (2),
- d'identification d'un accident du véhicule (100) par l'unité de commande (2) au moyen des données de véhicule (DF1), et
- d'amener d'un frein de stationnement (124) du véhicule (100) dans une position de freinage (BS) par l'unité de commande (2), lorsque l'unité de commande (2) identifie un accident (U?) du véhicule (100)
**caractérisé en ce que** les données de véhicule (DF1) représentent une position de rotation (LD) du véhicule (100).

14. Procédé (400) selon la revendication 13, dans lequel l'étape d'identification d'un accident (U) du véhicule (100) par l'unité de commande (2) au moyen des données de véhicule (DF1) présente :
- l'identification d'une valeur (WD) d'une accélération de rotation (BD) du véhicule (100) autour d'un axe vertical (AH), axe transversal (AQ) et/ou d'un axe longitudinal (AL) par l'unité de commande (2) sur la base des premières données de véhicule (DF1),
- la comparaison de l'accélération de rotation (BD) identifiée à une valeur limite (GW) prédéfinie, et
- la détermination d'un accident (U) du véhicule (100), lorsque la valeur (WB) de l'accélération de rotation (BD) dépasse la valeur limite (GW) prédéfinie.

15. Procédé (400) selon l'une quelconque des revendications 13 ou 14, dans lequel l'unité capteur (4) présente un capteur de vitesse de rotation (6).

16. Procédé (400) selon l'une quelconque des revendications 13 à 15, dans lequel l'unité capteur (4) présente un capteur de charge par essieu (8) et/ou peut être reliée à un capteur de charge par essieu (8) du véhicule (100).

17. Procédé (400) selon la revendication 14 et 16, dans lequel l'étape d'identification d'une valeur (WB) d'une accélération de rotation (BD) du véhicule (100) par l'unité de commande (2) sur la base des premières données de véhicule (DF1) présente :
- l'identification d'une première répartition de charge par essieu (ALV1) du véhicule (100) à un premier moment (t1),
- l'identification d'une deuxième répartition de charge par essieu (ALV2) du véhicule (100) à un deuxième moment (t2),
- l'identification d'une modification de charge par essieu (ΔALV) à partir de la différence de la première répartition de charge par essieu (ALV1) et de la deuxième répartition de charge par essieu (ALV2),
- l'identification d'une vitesse de modification de charge par essieu (ALR) sur la base de la modification de charge par essieu (ΔALV) et d'un intervalle de temps (Δt) écoulé à partir du premier moment (t1) jusqu'au deuxième moment (t2), et
- l'identification d'une accélération de rotation (BD) autour d'un axe vertical (AH), axe transversal (AQ) et/ou axe longitudinal (AL) du véhicule (100) sur la base de la vitesse de modification de charge par essieu (ALR).

18. Procédé (400) selon l'une quelconque des revendications 13 à 17, présentant en outre :
- la fourniture d'un signal de véhicule (SF) d'un sous-système de véhicule (132), de préférence d'un capteur de vitesse de roue (148), d'un appareil de commande de moteur (137), d'une unité de commande principale (130) du véhicule (100), d'un capteur de pression d'huile (141), d'un capteur de liquide de refroidissement (142), d'un capteur de force d'accouplement (150), d'un ou plusieurs capteurs d'accélération (155), d'un ou plusieurs capteurs d'environnement (157) et/ou d'un capteur d'angle d'articulation (154),
- la comparaison du signal de véhicule (SF) et/ou d'une variation dans le temps du signal de véhicule (SF) à un critère de signal (SK) prédéfini par l'unité de commande (2),
dans lequel l'étape d'identification d'un accident (U) du véhicule (100) par l'unité de commande (2) au moyen des données de véhicule (DF1) présente :
- l'identification d'un accident (U) du véhicule (100) sur la base des données de véhicule (DF1) et de la comparaison du signal de véhicule (SF) et/ou de la variation dans le temps du signal de véhicule (SF) au critère de signal (SK) prédéfini.

19. Procédé (400) selon la revendication 18, dans lequel
la commutation du frein de stationnement (124) dans la position de freinage (BS) par l'unité de commande (2) ne s'effectue que lorsque le signal de véhicule (SF) et/ou la variation dans le temps du signal de véhicule (SF) remplit le critère de signal (SK) prédéfini.

20. Procédé (400) selon l'une quelconque des revendications 13 à 17 présentant en outre :
- l'actionnement d'une pédale d'accélérateur (133) ou d'un dispositif de desserrage d'urgence (134) du véhicule (100),
- la fourniture d'un signal de conduite (SF) par la pédale d'accélérateur (133) ou le dispositif de desserrage d'urgence (134) en réponse à l'actionnement, et
- le desserrage du frein de stationnement (124) par l'unité de commande (2) lorsqu'un signal de conduite (SD) est fourni.

21. Procédé (400) selon l'une quelconque des revendications 13 à 20, présentant en outre :
- le déclenchement d'un appel d'urgence (N), lorsqu'un accident (U) du véhicule (100) est identifié.

22. Véhicule (100), en particulier véhicule utilitaire (102), présentant un système de sécurité de véhicule (1) selon l'une quelconque des revendications précédentes 1 à 12, qui est réalisé pour la mise en œuvre d'un procédé (400) selon l'une quelconque des revendications précédentes 13 à 21.
